(19) Europäisches Patentamt
European Patent Office
Office européen des brevets

(11) EP 4 703 392 A1

(12) **EUROPEAN PATENT APPLICATION**

(43) Date of publication:
**04.03.2026 Bulletin 2026/10**

(21) Application number: **24306431.8**

(22) Date of filing: **02.09.2024**

(51) International Patent Classification (IPC):
***C08B 37/02*** *(2006.01)* ***C07B 45/02*** *(2006.01)*

(52) Cooperative Patent Classification (CPC):
**C08B 37/0021; C07B 45/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **Organes Tissus Régénération Réparation Remplacement
75001 Paris (FR)**
- **Barritault, Denis
75001 Paris (FR)**

(72) Inventors:
- **BARRITAULT, Denis
75001 Paris (FR)**
- **DE LICHY, Aubert
75015 Paris (FR)**

(74) Representative: **Novagraaf Technologies
Bâtiment O2
2, rue Sarah Bernhardt
CS90017
92665 Asnières-sur-Seine Cedex (FR)**

(54) **A METHOD FOR N-,O-SULFONATION AND ACETYLATION OF A COMPOUND**

(57) The invention relates to a method for sulfation and acetylation of a compound having one or more hydroxyl group, wherein the method comprises, in a single reaction batch, the reaction of said compound with Sulphur trioxide/N,N-dimethylformamide (SOs-DMF) and $CH_2(CO)O(CO)CH_2$ in presence of a hydrolyzing reagent.

The present invention has an application in particular in the therapeutic, pharmaceutical and chemical fields.

**a.**

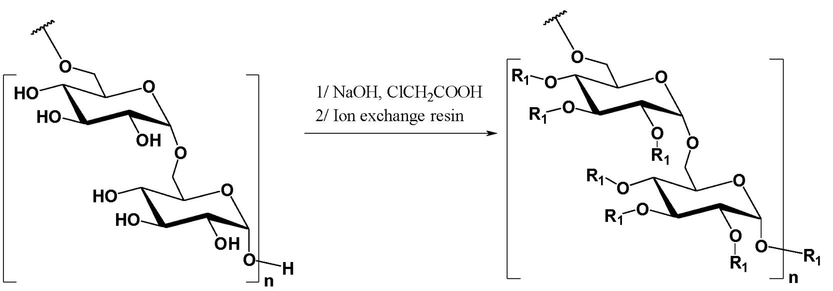


**Dextran 40**
**CAS 9004-S4-0**

R1=-H or $-CH_2COOH$
**Carboxymethyldextran CMDH+**

**b.**

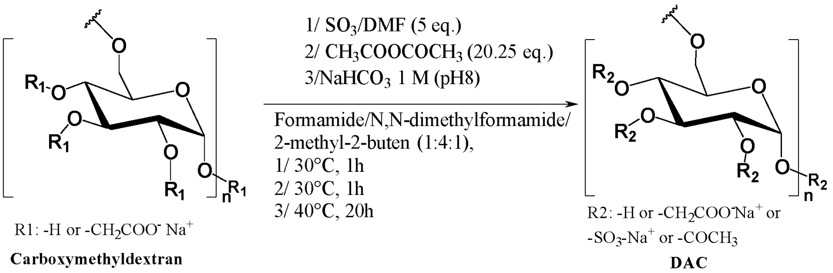


R1: -H or $-CH_2COO^-$ $Na^+$
**Carboxymethyldextran**

R2: -H or $-CH_2COO^-Na^+$ or $-SO_3$-$Na^+$ or $-COCH_3$
**DAC**

**FIGURE 1**

EP 4 703 392 A1

## Description

### TECHNICAL FIELD

The present invention relates to a method for N-,O-sulfonation and acetylation of a compound having one or more hydroxyl group.

The present invention has an application in particular in the therapeutic, pharmaceutical and chemical fields.

In the following description, the references between parentheses () refer to the list of references presented at the end of the text.

### STATE OF THE ART

RGTA® are polymeric compounds, for instance glucose polymers like dextran, comprising or functionalized with carboxylate, sulfate and acetate groups (or other substituents). This allows these polymers to mimic biological activities of natural glycosaminoglycans and to replace them when they are degraded in injured tissues permitting to restore/maintain tissue homeostasis. Compounds having defined structures with set positions of carboxylic and sulfate groups have exhibited remarkable biological activities, showing a great industrial potential (RGTA® from the OTR3 company). These structures can be modified by the introduction of acetyl groups to better mimic glycosaminoglycans, all of which possess acetyl/acetate groups. However, the introduction of acetyl/acetate groups must not alter the overall structure with regard to sulfate and carboxylate groups. Method for producing RGTA are known in the art, however they imply several steps and does not allow to introduce, for example the acetyl/acetate group, so as not to interfere with sulfate and carboxylate positions. Thus, the known method for producing RGTA does not allow to obtain completely pure product and/or need many steps that could reduce the efficiency of the method and increase the cost of such method.

Accordingly, there is a need in the art to find a method that allows to produce compound comprising carboxylate, sulfate and acetate group in a more efficient and simples way. There is also a need to find a faster and less expensive method that allows to produce compound comprising carboxylate, sulfate and acetate groups, for example RGTA.

Method for carboxymethylation and/or N,-O-sulfonation/sulfation of compounds are known in the art. For example, Pengfeng et al. (Preparation and characterization of carboxymethyl chitosan sulfate / oxidized konjac glucomannan hydrogels, International Journal of Biological Macromolecules 2018 [1]) described a method for carboxymethylating and sulfating chitosans (strategy (1)). Chitosans are polymers of D-glucosamines linked by an O-glycosidic β-1,4 bond and randomly N-acetylated (with a degree of acetylation of less than 0.5 acetyl per glucosidic unit). In the first step, chitosan is suspended with sodium hydroxide and isopropanol, then monochloroacetic acid is added to the solution allowing, by nucleophilic substitution, to obtain carboxymethyl ethers and amines respectively from the free hydroxyls and amines of glucosamines. The second step involves sulfating chitosan carboxymethyls using MesN/SOs as the sulfating agent. Carboxymethylchitosans are thus randomly N-sulfated and O-sulfated. This document clearly mentioned that the infra-red spectra of the intermediate shows the loss of amide bonds and hence deacetylation as early as the carboxymethylation stage, confirming the impossibility of retaining acetyls under these carboxymethylation conditions. Accordingly, the disclosed method does not allow to produce compound comprising sulfate and/or acetate group. In particular, the disclosed method does not allow to produce compounds comprising carboxylate, sulfate, and acetate group.

Muvarelli et al. (Sulfate d N-(Carboxymethyl)Chitosans: Novel Blood Anticoagulants, Carbohydrate Research, 1984 [2]) discloses a method for preparing a carboxymethylated chitosan. The preparation of a carboxymethyl chitosan was carried out in two steps: the first involved the preparation of a carboxymethylidene chitosan (corresponding to the addition of carboxymethylidenes: carboxymethyls linked to the amine of glucosamines by imine bonds) by addition of nucleophile to a glyoxilic acid. During the reaction, the pH is raised to 12 by adding sodium hydroxide. The second step is a reduction of the imine with sodium cyanoborohydride. The disclosed method is limited to the preparation of N-acetylated products and thus to the formation of amide bonds, and does not apply to the production of O-acetylated products. Accordingly, the disclosed method does not allow to produce substitution with carboxylate, preferably carboxymethyl ether, sulfate and acetate groups.

Thus, there is a need in the art to find a method that allows to produce compounds comprising carboxylate, sulfate and acetate groups in a more efficient and simples way. There is also a need to find a faster and less expensive method that allows to produce compounds comprising carboxylate, sulfate and acetate groups, for example RGTA.

In addition, is has been demonstrated that known method(s) for producing dextran polymers comprising carboxymethyl, sulfate and acetyl groups does not provide stable product(s), in particular when suspended in aqueous solution.

Thus, there is a need in the art to find a method that allows to produce compound comprising carboxylate, sulfate and acetate groups in a more efficient and simple way. There is also a need to find a faster and less expensive method that allows to produce compound comprising carboxylate, sulfate and acetate groups, for example RGTA.

## DESCRIPTION OF THE INVENTION

The present invention aims specifically to address these needs by providing a method for sulfation and acetylation of a compound having one or more hydroxyl group, wherein the method comprises, in a single reaction batch, the reaction of said compound with SOs-DMF and $CH_2(CO)O(CO)CH_2$ in presence of a hydrolyzing reagent, preferably an acid or a base, and more preferably a weak base.

The present invention aims specifically to address these needs by also providing a method for sulfation and acetylation of a compound having one or more hydroxyl group(s), wherein the method comprises, in a single reaction batch, the reaction of said compound with SOs-DMF followed by reaction with $CH_2(CO)O(CO)CH_2$ and then, in the same reaction media, with a hydrolyzing reagent, preferably an acid or a base, and more preferably a weak base, all in the same reaction batch/reaction media.

Advantageously, the inventors have demonstrated surprisingly that the method of the invention allows a quick and effective synthesis of compounds comprising sulfate and acetate groups advantageously without any intermediated concerning mixed anhydrides and without any remaining instable product. In particular, the inventors have surprisingly demonstrated that the process of the invention allows in a single pot to sulfate/sulfonate and acetylate compounds having one or more hydroxyl group(s).

The inventors have also demonstrated that the method of the invention is fast and effective for producing compounds comprising sulfate and acetate groups without any contaminant and unstable intermediate. The method of the invention advantageously allows to produce compounds comprising sulfate and acetate groups without secondary product. In addition, the inventors have demonstrated that the obtained compound are advantageously stable over the time. In other words, the method of the invention allows to produce compounds in accordance with the requirement of the regulation, for example regarding the stability and/or the purity of the produced compound.

The inventors have also demonstrated that the method of the invention allows to substitute -H group from hydroxyl group by acetyl groups to compounds having one or more hydroxyl group already substituted with carboxylate and/or sulfate group(s) without affecting the level and position of these groups.

The inventors have also demonstrated that the method of the invention, when it comprises a preliminary step of carboxymethylation of compound having one or more hydroxyl group, allows surprisingly and advantageously the synthesis of carboxymethylated, sulfated and acetylated compounds within only 2 steps. In other words, the inventors have demonstrated surprisingly that the method of the invention allows a quick and effective synthesis of compounds comprising carboxymethyl ether, sulfate and acetate group and allows the synthesis of substituted compounds stable in time. Advantageously, the produced compounds are stable in time when storage in aqueous solution or dried. The method of the invention allows advantageously to produce compounds compatible with the requirements of the regulation of medical agencies for therapeutical use of said compounds.

Advantageously, the method of the invention allows to produce compounds comprising sulfate and acetate groups.

In the present "hydrolyzing reagent" means a substance or mixture of substances capable of hydrolyzing a bond, for example capable of hydrolyzing mixed anhydride, for example selected from the group comprising R-O-$CH_2$-COO-$SO_3$-, R-O-$CH_2$COO-$COCH_3$, R-O-SOs-COCHs, R-O-$CH_2$-COO-$SO_3$-$COCH_3$.

The hydrolyzing reagent can be, for example, an acid or a base. It can be for example any acid adapted known from one skilled in the art. It can be for example an acid, preferably an acid solution, with a pH from 2 to 6 for example an acid with a pH of 3. It can be for example a weak acid. It can be for example an organic acid, for example a carboxylic acid, for example selected from the group comprising methanoic acid, acetic acid, trifluoroacetic acid and camphorsulfonic acid. It can be for example a mineral acid, for example an acid selected from the group comprising, hypochlorous acid (HOCl), boric acid ($H_3BO_3$) and hydrocyanic acid (HCN). The base solution can be for example sodium hydroxide 1 M solution, for example sodium hydroxide 0.1 M solution, for example sodium hydrogenocarbonate 1 M solution.

The hydrolyzing reagent can be, for example a base with a pH greater than 7, for example from 7 to 14, for example a base with a pH of 8. The hydrolyzing reagent can be an aqueous solution comprising said base. It can be for example a weak base. It can be for example a base selected from the group comprising ammonia, methylamine, ammonium hydroxide, bicarbonate, carbonate or any salt thereof.

The hydrolyzing reagent can be of formula HCOsR wherein R is a hydrogen atom or a cation $M^+$, preferably $M^+$ is an alkali metal selected from the group comprising lithium, sodium, potassium, rubidium and cesium cation. Preferably the hydrolyzing reagent is sodium bicarbonate ($HCO_3^-$ $Na^+$).

The concentration of the hydrolyzing reagent in the batch can be from 0.7 to 4 M, preferably of 1 M.

The form of the hydrolyzing reagent can be solid or liquid. For example, the hydrolyzing reagent can be pure, in solid or liquid form.

In the present by "sulfation" is the chemical reaction that entails the addition of -SOs group, when it is an -O heteroatom, it is named O-sulfation, when it is an -N heteroatom is it named N-sulfation.

In the present "compound having one or more hydroxyl group" can be any compound having one or more

hydroxyl group known from one skilled in the art that can be sulfated and/or acetylated. It can be for example a compound selected from the group comprising monomers, oligomers and polymers. It can be any polymer having one or more hydroxyl group known from one skilled in the art and/or commercially available. It can be for example compound, polymer derived from dextrans and/or copolymers of malic acids. It can be a polymer comprising monomers "A" that constitute the basic elements of the polymer. For example, it can be polymer comprising a monomer "A" identical or different selected from sugars, esters, alcohols, amino acids, nucleotides, nucleic acids, proteins and/or derivatives thereof.

In the present, the identical or different A monomers can be independently selected from sugars or derivatives thereof.

In the present, the A monomers can be independently monomers of the following formula:

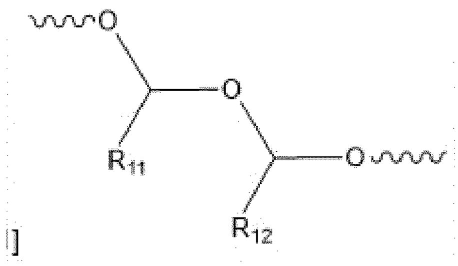

wherein $R_{11}$ and $R_{12}$ are independently an oxygen atom, an aliphatic hydrocarbon chain, optionally branched and/or unsaturated, a heteroaryl group comprising independently one or more oxygen and/or nitrogen atoms, an aldehyde function, a carboxylic acid group, a diol, a substituted diol, a group of formula $-R_{13}-(W)n-R_{14}$ wherein $R_{13}$ is a $C_1$ to $C_4$ aliphatic carbon chain, optionally branched and/or unsaturated, W is a heteroatom selected from oxygen and nitrogen, is an integer ranging from 1 to 4 and $R_{14}$ is a hydrogen atom, an aliphatic hydrocarbon chain, optionally branched and/or unsaturated, a heteroaryl group comprising independently one or more oxygen and/or nitrogen atoms, an aldehyde function, a carboxylic acid group, a diol, a substituted diol.

In the present, the combination of monomers can make it possible to form a polymeric backbone, for example a polymeric backbone of polyester, polyalcohol, polysaccharide, of the nucleic acid or protein type.

In the present, among the polyesters, these can be for example copolymers from biosynthesis or chemical synthesis, for example aliphatic polyesters or polyesters of natural origin for example polyhydroxyalkanoates.

In the present, the polysaccharides and their derivatives can be of bacterial, fungal, animal and/or plant origin. They can be for example single-chain polysaccharides, for example polyglucoses, for example dextran, cellulose, beta glucan, amidon/glycogen or other monomers comprising more complex units, for example xanthans, for example glucose, mannose, galactose, uronic acid and glucuronic acid, or glycuronans and glucoglucuronan, galactosamines, iduronic acid and/or protein derivatives highly glycosylated, for example mucins.

In the present, the polysaccharides of plant origin can be single-chain, for example cellulose (glucose), hemicellulose, pectins (galacturonic acid), fucans, starch or more complex like alginates (galuronic and mannuronic acid).

In the present, the polysaccharides of fungal origin can be for example steroglucan.

In the present, the polysaccharides of animal origin can be for example chitins or chitosan (glucosamine).

It can be a polymer comprising a monomer "A" selected from sugars or derivatives thereof. Preferably, it can be a polymer which is a derivative of dextran or a copolymer of malic acids.

In the present, the A monomers that constitute the basic elements of the polymers can be advantageously identical.

In the present, the A monomers that constitute the basic elements of the polymers can be advantageously glucose.

The compound having one or more hydroxyl group can be a polymer of formula:

AaXx (I)

wherein A is a monomer;
X is an $-R_1COOR_2$ or $-R_9(C{=}O)R_{10}$ group;
$R_1$ and $R_9$ are independently an aliphatic hydrocarbon chain, optionally branched and/or unsaturated and optionally containing one or more aromatic rings with the exception of benzylamine and benzylamine sulfonate,
$R_2$ is a hydrogen atom, a $R_{21}R_{22}$ group wherein $R_{21}$ is an anion and $R_{22}$ a cation selected from the group of the alkali metals, or an $M^+$ cation,
$R_{10}$ is independently a bond, an aliphatic hydrocarbon chain, optionally branched and/or unsaturated,
a is the number of monomers,

x is the rate or level or degree of substitution of the A monomers by X groups.

The monomer "A" is as defined above.

The number of A monomers defined by "a" can be such that the weight of said polymers is greater than or equal to 400 Daltons. The number of A monomers can be such that the weight of said polymers is between around 1 000 and 6000 Daltons, for example which corresponds to at least 5 glucose monomers. For example, the weight of said polymers of formula (I) can be between around 3000 Daltons and 6000 Daltons, for example which corresponds to 12 to 20 glucose monomers.

The number of A monomers defined in formula (I) by "a" can also be such that the weight of said polymers of formula (I) is less than about 2 500 000 Daltons (which corresponds to 12000 glucose monomers).

The number of A monomers defined in formula (I) by "a" can also be such that the weight of said polymers of formula (I) can be from around 400 to 500000 Daltons, for example from 400 to 250000 Daltons (which corresponds to 2 to around 1200 glucose monomers), for example from 2000 to 120000 Daltons, for example from 20000 to 250000 Daltons, for example from 75000 to 150000 Daltons.

Advantageously, the weight of said polymers of formula (I) can be from 3000 to 250000 Daltons, for example from 3000 to 6000 Daltons, or for example from 20000 to 250000 Daltons, or for example from 75000 to 150000 Daltons.

Advantageously, the weight of said polymers of formula (I) can be from 3000 to 500000 Daltons, for example from 3000 to 250000 Daltons, for example from 3000 to 6000 Daltons, or for example from 20000 to 250000 Daltons, or for example from 75000 to 150000 Daltons.

In the present invention, in the $-R_1COOR_2$ group representing X, $R_1$ can be a $C_1$ to $C_6$ alkyl, for example a methyl, ethyl, butyl, propyl, pentyl, preferably a methyl group, and $R_2$ can be a bond, a $C_1$ to $C_6$ alkyl, for example a methyl, ethyl, butyl, propyl, pentyl, an $R_{21}R_{22}$ group wherein $R_{21}$ is an anion and $R_{22}$ a cation selected from the group of the alkali metals.

Preferably, the X group is the group of formula $-R_1COOR_2$ wherein $R_1$ is a methyl group $-CH_2-$ and $R_2$ an $R_{21}R_{22}$ group wherein $R_{21}$ is an anion and $R_{22}$ a cation selected from the group of the alkali metals, preferably the X group is a group of formula $-CH_2-COO^-$, $-CH_2-COOH$ or carboxymethyl.

In the present invention, in the $-R_9(C{=}O)R_{10}$ group representing X, $R_9$ can be a $C_1$ to $C_6$ alkyl, for example a methyl, ethyl, butyl, propyl, pentyl, preferably a methyl group, and $R_{10}$ can be a bond, a $C_1$ to $C_6$ alkyl, for example a methyl, ethyl, butyl, propyl, pentyl, hexyl.

The rate of substitution of all the A monomers by the X groups defined in the general formula (I) by "x" can be from 10 to 400%, from 40 to 80%, from 40 to 60%, from 40 to 45%. When "x" is from 40 to 60%, it may be preferably equal to 50 or 60%. When "x" is from 40 to 45%, it may be preferably equal to 41, 43 or 44%

In the present, the definition of the rates of substitution above, a rate of substitution "x" of 100% means that each A monomer of the polymer of the invention statistically contains an X group.

In the present, the single reaction batch means that the method of the invention is carried out in a single reaction mixture, for example a single reactor. Advantageously, the method of the invention allows chemical synthesis of compound substituted with sulfate and acetyl groups with several successive and/or simultaneous chemical reactions in a single reaction mixture, advantageously a single reactor.

According to the invention, the method can comprise the following steps:

a) preparation of a homogeneous solution of the compound having one or more hydroxyl group in an anhydrous solvent or cosolvent;
b) addition of SOs-DMF and $CH_2(CO)O(CO)CH_2$ under agitation;
c) adding a hydrolyzing reagent, preferably an acid or a base, and more preferably a weak base,
d) agitation of the mixture obtained in step c) for 1 to 24 hours, preferably 20 hours at a controlled temperature from 20 to 50°C, preferably of 40°C.

Advantageously, steps a) to d) are carried out in a single batch.

According to the invention, the method can comprise the following steps:

a) preparation of a homogeneous solution of the compound having one or more hydroxyl group in an anhydrous solvent or cosolvent;
b) addition of SOs-DMF followed by $CH_2(CO)O(CO)CH_2$,
c') adding the reaction mixture obtained in step b) into a solution of a hydrolyzing reagent,
d') agitation of the mixture obtained in step c') for 1 to 24 hours, preferably 20 hours at a controlled temperature from 20 to 50°C, preferably of 40°C.

Advantageously, steps a) to b) are carried out in a single batch.

Advantageously, steps c') to d') are carried out in a single batch.

In the present the concentration of the compound having one or more hydroxyl group in the anhydrous solvent or cosolvent can be for example from 0.1 mM to 10 M, for example from 1 mM to 5 M, from 1 mM to 1 M, from 10 mM to 80 mM, from 20 mM to 50 mM, from 25 mM to 35 mM, for example equal to 0.29 mM anhydrous solvent or cosolvent.
When the compound having one or more hydroxyl group is a polymer, preferably of formula (I) as mentioned above, the concentration of said "monomer A" in the anhydrous solvent or cosolvent can be from 0,20 mM to 10 M, for example from 0,30 mM to 5 M, from 1 mM to 1 M, preferably from 0.50mM to 550 mM, for example from 0.53 mM to 530 mM, from 2.6 mM to 265 mM, from 53 mM to 105 mM,; for example equal to 70 mM.
For example, the molar concentrations of polymers of formula (I) may be the molar concentration of the monomer of formula AXx (II).

wherein A is a monomer as defined above,
X is an $-R_1COOR_2$ or $-R_9(C{=}O)R_{10}$ group as defined above;
$R_1$ and $R_9$ are independently an aliphatic hydrocarbon chain, optionally branched and/or unsaturated and optionally containing one or more aromatic rings with the exception of benzylamine and benzylamine sulfonate,
$R_2$ is a hydrogen atom, a $R_{21}R_{22}$ group wherein $R_{21}$ is an anion and $R_{22}$ a cation selected from the group of the alkali metals, or an $M^+$ cation,
$R_{10}$ is independently a bond, an aliphatic hydrocarbon chain, optionally branched and/or unsaturated,
x is the rate or level or degree of substitution of the A monomers by X groups.

The molecular weights (MW) of the monomer of the polymer of formula (I) may be determined as follows:

$$MW = Mw(A)+Mw(X)*x \quad (III)$$

Wherein Mw(A) is the molecular weight of the A monomer as defined in formula (I) and in formula (II). For example, in a dextran polymer, monomer A is glucose and its molar weight Mw(A) is 162 g/mol,

Mw(X) is the molecular weight of the X group as defined in formula (I) and in formula (II). For example, when X is a carboxymethyl ether group, the molecular weight Mw(X) is 58 g/mol, and
x is the rate or level or degree of substitution of the A monomers by X groups.

For example, when the monomer A is a glucose, for example the polymer being a dextran comprising carboxymethyl ether groups with a rate of substitution "x" of 50%, the molecular weight of the monomer in formula (I) may be calculated as follows: MW= 162+ (58*0,5), for example the molecular weight is 191 g/mol.
In the present, the concentration of polymers of formula (I) can be also expressed in equivalent of the monomer of formula "A" or in equivalent of the free reactive hydroxyl groups of the monomer of formula AXx (II). Table 1 below illustrates different examples of equivalents of polymers of formula (I), wherein monomer A is glucose and X is carboxymethyl or $-CH_2COO^-Na^+$ and x is the rate or level or degree of substitution of the A monomer by X groups.

TABLE 1: equivalents in A monomer or of free reactive hydroxyl groups of monomer A for carboxymethyldextran and the associated molecular weight.

| A | X | x rates of substitution (%) | Molecular weight of monomer of formula (II) | Equivalents of monomer of formula (II) | Equivalents of free reactive hydroxyl groups of monomer A |
|---|---|---|---|---|---|
| Glucose | $-CH_2COONa$ | 0 | 162 | 1 | 3 |
| Glucose | $-CH_2COONa$ | 44 | 197 | 1 | 2.56 |
| Glucose | $-CH_2COONa$ | 100 | 242 | 1 | 2 |
| Glucose | $-CH_2COONa$ | 200 | 322 | 1 | 1 |

In the present the concentration of the compound, represented by AXx (II), when A is glucose x can be from 0 to 400%; for example, when x is equal to 0 it means that the hydroxyl groups of A are not substituted by an X group and when x is equal to 400%, it means that the four hydroxyl group of A are each substituted by an X group. A is here considered as a monomer in the reaction mixture as represented by its molar weights, quantity of matter (when divided by the representative molar weight of the monomer) or molarity (when divided by the representative molar weight of the monomer and the volume of the solvent). A monomer 'AXx' having one or more hydroxyl group in the anhydrous solvent or cosolvent can be for example from AXx.

For example, when A is glucose, and X is carboxymethyl or $-CH_2COO^-Na^+$ when x=0, the molecular weight of the monomer is 162 g/mol. the concentration of monomer of formula (II) AXx in the anhydrous solvent or cosolvent can be from 0.072 g/L to 72 g/L, for example from 0.36 g/L to 36 g/L, from 7.2 g/L to 14.4 g/L, for example equal to 9.4 g/L of anhydrous solvent or cosolvent.

For example, when A is glucose and X is carboxymethyl or $-CH2COO^-Na+$, when x=44%, the molar weight of its monomer of formula AXx (II) will be 197 g/mol, the concentration of monomer of formula (II) AXx in the anhydrous solvent or cosolvent can be 0.1 g/L to 100 g/L, for example from 0.5 g/L to 50 g/L, from 10 g/L to 20 g/L, for example equal to 13 g/L of anhydrous solvent or cosolvent. The concentration of a monomer of formula (II), as mentioned above, in the anhydrous solvent or cosolvent can be from 0,20 mM to 10 M, for example from 0,30 mM to 5M, from 1 mM to 1 M, preferably from 0.50 mM to 550 mM, for example from 0.53 mM to 530 mM, from 2.6 mM to 265 mM, from 53 mM to 105 mM ; for example equal to 70 mM. For example, when A is glucose and X is carboxymethyl or $-CH2COO^-Na^+$, when x=100%, the molar weight of monomer of formula (II) AXx (II) is 242 g/mol, its concentration can be 0.16 g/L to 161 g/L, for example from 0.81 g/L to 81 g/L, from 16 g/L to 32 g/L, for example equal to 21 g/L of anhydrous solvent or cosolvent or from 0.53 mM to 530 mM, from 2.6 mM to 265 mM, from 53 mM to 105 mM ; for example equal to 70 mM. For example, when A is glucose and X is carboxymethyl or $-CH2COO^-Na^+$, when x=200%, the molar weight of its monomer of formula (II) AXx is 322 g/mol. Its concentration can be 0.43 g/L to 429 g/L, for example from 2.15 g/L to 215 g/L, from 42.9 g/L to 85.9 g/L; for example equal to 55.8 g/L of anhydrous solvent or cosolvent or from 0.53 mM to 530 mM, from 2.6 mM to 265 mM, from 53 mM to 105 mM ; for example equal to 70 mM.

In the present, the anhydrous solvent can for example be selected from the group comprising formamide, dimethylformamide (DMF), Dimethyl sulfoxide (DMSO), N-methyl-2-pyrrolidone, Dihydrolevoglucosenone, formic acid preferably dimethylformamide (DMF).

In the present, the cosolvent can for example be selected from the group comprising a mix of formamide and dimethylformamide (DMF), a mix of *N*-methyl-2-pyrrolidone and DMSO, a mix of formic acid and DMF, preferably a mix of formamide and dimethylformamide (DMF).

Advantageously, when the cosolvent is a mix of formamide and dimethylformamide (DMF), the ratio of formamide to dimethylformamide (DMF) can be 0.1 to 0.5, preferably 0.28.

In the present, the method can further comprise in step a) adding an acid scavenger in the solvent or cosolvent.

In the present, "acid scavenger" means a substance or mixture of substances capable of reacting selectively with free protons in solution. After addition of the acid capture agent to a reaction medium, the protons are trapped by the acid capture agent and no longer participate in reduction of the pH value because they are no longer reactive.

The "acid scavenger" can be, for example, selected from the group comprising: alkenes or alkynes with a boiling point lower than about 100°C. The acid scavenger can be a butene, for example selected from the group comprising 2-methyl-2-butene (2M2B), 2-methyl-propene, 2-methyl-pentene, isomers thereof or mixtures thereof. Preferably, the acid scavenger is 2-methyl-2-butene (2M2B).

In the present, the duration of step a) can be from 1 minutes to 2 hours, for example of 1 hour.

In the present, step a) can be carried out at a temperature from 10 to 70°C for example from 25 to 35°C, for example at 30°C.

In the present, in step a) the acid scavenger can be used under reflux.

In the present, step b) of addition of SOs-DMF and $CH_2(CO)O(CO)CH_2$ can be carried out by any process or method know from one skilled in the art. For example, the addition can be carried out directly in the homogenous solution obtained in step a). For example, the addition can be carried out directly in the homogenous solution obtained in step a) under stirring or agitation. The stirring can be carried out by any adapted method or device know from on skilled in the art. For example, the stirring may be carried out with a bar stirrer at 200 rpm to 2000 rpm. The stirring time may be for example from 1 to 10 minutes.

In the present the SOs-DMF can be added, in step b) in the homogenous solution obtained in step a) so that its concentration can be for example from 23 g/L to 69 g/L, for example from 31 g/L to 61 g/L, from 45 g/L to 69 g/L, from 49 g/L to 57 g/L, from 0.01 mM to 10 M, for example from 100 mM to 500 mM, from 150 mM to 450 mM, from 200 mM to 400 mM, from 296 mM to 452 mM, from 320 mM to 370 mM. For example, the SOs-DMF can be added, in step b) in the homogenous solution obtained in step a) so that its concentration can be 353 mM.

In the present the $CH_2(CO)O(CO)CH_2$ can be added, in step b) in the homogenous solution obtained in step a) so that its concentration can be from 250 mM to 5 M. For example the $CH_2(CO)O(CO)CH_2$ can be added, in step b) in the homogenous solution obtained in step a) so that its concentration can be 0.55 M to 2.92 M, for example from 0.8 M to 2 M, the $CH_2(CO)O(CO)CH_2$ can be added, in step b) in the homogenous solution obtained in step a) so that its concentration can be 1.46 M.

In the present, the duration of step b) can be from 1 minutes to 2 hours, for example of 1 hour.

In the present, step b) can be carried out at a temperature from 10 to 40°C, for example from 25 to 35°C, for example at 30°C.

According to the invention, the addition of SOs-DMF and $CH_2(CO)O(CO)CH_2$ can be simultaneously or

sequentially. For example, when the addition of SOs-DMF and $CH_2(CO)O(CO)CH_2$ is sequentially, SOs-DMF can be added before the addition of $CH_2(CO)O(CO)CH_2$. For example, addition of SOs-DMF can be carried out from 1 min to 5 hours; for example, 1 h before addition of $CH_2(CO)O(CO)CH$.

In the present, the duration of step c) can be from 1 to 24 hours, for example of 20 hours.

In the present, step c) can be carried out at a temperature from 20 to 100°C, for example from 30 to 45°C, for example at 40°C.

In the present, step c) of addition of hydrolyzing reagent can be carried out by any process or method know from one skilled in the art. For example, the addition can be carried out directly in the solution obtained in step b).

In the present, step c) can be carried out at a temperature from 20 to 50°C, for example from 30 to 45°C, for example at 40°C

In the present the hydrolyzing reagent can be added, in step c) in the solution obtained in step b) so that its concentration be from 0.75 to 5 M, for example equal to 1 M.

In the present, the form of the hydrolyzing reagent may be pure, solid or a solution.

The hydrolyzing reagent is as defined above.

In the present, step c') of addition of the reaction mixture into a solution of hydrolyzing reagent can be carried out by any process or method know from one skilled in the art. For example, the addition can be carried out directly in the solution obtained in step b). For example, the addition the reaction mixture into the solution of hydrolyzing reagent can be dropwise, for example 1 drop per second, for example 6 drops per second (or $0.25 L.min^{-1}$ . For example, the addition the reaction mixture into the solution of hydrolyzing reagent can be at a flow rate of 0.125 to 1,2 $L.min^{-1}$, for example from 0.166 to 0.5 $L.min^{-1}$, for example equal to 0.25 $L.min^{-1}$.

The method of the invention advantageously comprises a further purification step e) of the compound obtained in step (d) or (d'). The purification step can be any purification step adapted known from one skilled in the art. It can be for example by tangential ultrafiltration against water (the water being of the quality of water for human injection) via an ultrafiltration membrane at a cutoff threshold of about 10000 Dalton. For example, the filtration step can be an ultrafiltration method using an ultrafiltration membrane at a cutoff threshold of about 10000 Dalton against water having a resistivity from 150 to 18 MΩ, for example equal to 200 kΩ.

When the compound having one or more hydroxyl group is a polymer of formula AaXx(I) as defined above, the product obtained by the method of the present invention can be of formula AaXxYyZz (IV) wherein:

A, a, X, x is as defined above,
Y is an O sulfonate group and has one of the following formula $R_7SO_3R_8$,
Z is an acetate group of formula $-OCOCH_3$ wherein:

- $R_8$ is a hydrogen atom or an $M^+$ cation, for example $M^+$ can be an alkali metal selected from the group comprising lithium, sodium, potassium, rubidium and cesium,
- $R_7$ is a bond, an aliphatic hydrocarbon chain, optionally branched and/or unsaturated,
- a is the number of monomers,
- x is the rate of substitution of the A monomers by X groups,
- y is the rate of substitution of the A monomers by Y groups, and
- z is the rate of substitution of the A monomers by Z groups.

In the present, the rate of substitution of all the A monomers by the Y groups defined in the general formula (IV) by "y" can be from 10 to 170%, from 30 to 150%, from 55 to 160%, from 70 to 120% or from 90 - 120%. It may be from 10 to 170%, from 30 to 150%, and preferably of 70, 110%, 140 or 150. The rate of substitution of all the A monomers by the Y groups defined in the general formula (II) by "y" can be from 90 - 120%, from 99 to 116%. It may be preferably equal to 99%, 109%, 111%, 112% or 116%.

In the present, the rates of substitution by Z groups represented by "z" can be from 1 to 50%, from 1 to 30% from 1 to 20%, from 1 to 15%, from 1 to 10%. When "z" is from 10 to 30%, it may be preferably equal to 9, 15, 20, 25 or 30%. When "z" is from 1 to 10%, it may be preferably equal to 2, 4, 5, 8 or 9%.

Substitution rates above 100% mean that each monomer statistically carries more than one group of the type in question; conversely, substitution rates below 100% mean that each monomer statistically carries less than one group of the type in question.

Advantageously, the method of the invention allows to obtain a polymer of formula (II) AaXxYyZz wherein the X, Y and Z groups can be independently bonded to the A monomer.

Advantageously, the polymer of formula AaXxYyZz (IV) obtained by the method of the present invention does not comprise X, Y and Z groups independently bonded to one another. In particular, the obtained polymer of formula AaXxYyZz (II) does not comprise Z groups bonded by covalence directly to the X and/or Y groups

Advantageously, the inventors have also demonstrated that the method of the invention allow to produce

compounds comprising sulfate and acetate group in a single pot and/or batch without producing mixed anhydride, for example selected from the group comprising R-O-$CH_2$-COO-$SO_3^-$, R-O-$CH_2$COO-$COCH_3$, R-$OSO_3$-$COCH_3$, or R-O-$CH_2$-COO-$SO_3$-$COCH_3$, with R-O-corresponding to the monomers, oligomers and polymers as defined above in the context of the present invention

## Exemplification

The representative examples that follow are intended to help illustrate the invention, and are not intended to, nor should they be construed to, limit the scope of the invention. Indeed, various modifications of the invention and many further embodiments thereof, in addition to those shown and described herein, will become apparent to those skilled in the art from the full contents of this document, including the examples which follow and the references to the scientific and patent literature cited herein. It should further be appreciated that the contents of those cited references are incorporated herein by reference to help illustrate the state of the art.

The following examples contain important additional information, exemplification and guidance that can be adapted to the practice of this invention in its various embodiments and the equivalents thereof.

The present invention and its applications can be understood further by the examples that illustrate some of the embodiments by which the inventive medical use can be reduced to practice. It will be appreciated, however, that these examples do not limit the invention. Variations of the invention, now known or further developed, are considered to fall within the scope of the present invention as described herein and as hereinafter claimed. Other advantages can further emerge to those skilled in the art on reading the examples below, illustrated by the appended figures, and given by way of illustration.

### Brief description of the figures

**Figure 1** represents graphics of carboxymethylation of a Dextran (Figure 1a) and a graphic of sulfation and acetylation of a carboxymethylated monomer of dextran (Figure 1b).

**Figure 2** represent the evolution of the SEC-HPLC profile of dextran polymers (DAC) comprising carboxymethyl ether, sulfate - and acetate groups obtained by known synthesis method. It represents chromatographic spectra of dextran polymers (DAC) comprising carboxymethyl ether, sulfate - and acetate groups obtained by known synthesis method. Figure 2a. represents the spectra obtained after dissolution in aqueous NaCl 0,9% at t = 0 month, Figure 2b. represents the spectra obtained at: t = 3 months, Figure 2c. represents the spectra obtained at t = 6 months, and Figure 2d. represents the spectra obtained at t = 24 months. The abscissa represents the absorption at 240 nm (mAU) and the ordinate the time of elution (min)

**Figure 3** is a schematic representation of dextran polymers (DAC) comprising carboxymethyl ether, sulfate and acetate groups-. According to the nature of the group present at the position 2 (C2) of the glucosidic unit, four differently substituted units (A, B, C, and D) can be present in DAC polymers. Identification of each unit on the polysaccharide is possible by 400 MHz $^1$H NMR analysis (8 mg/mL in $D_2O$). For an easier representation these units were here arranged in an arbitrary combination. In addition, R represents the proportion of substituted group in the global C3 and C4 positions arranged to set the global ds of each group. The DAC composition, as stated by titrimetry, and $^1$H RMN (400 MHz, 8 mg/mL in $D_2O$) studies, is given.

**Figure 4** represent spectra of SEC-HPLC chromatogram of dextran polymers (DAC) comprising carboxymethyl ether, sulfate - and acetate groups obtained by known synthesis method suspended in aqueous saline solution (0.9%) at 200 μg/mL at different times after suspension. Storage conditions are 25°C/60% RH. HPLC elution conditions: Column: SEC Shodex 804, injected volume: 100 μL, eluent: $CuSO_4$ 100 mM and NaCl 50 mM, column temperature: 40°C, flow rate: 0.8 mL/min. Figure 4a. represents the spectra obtained immediately after obtention of the product as a white powder and dissolved in aqueous saline solution (0.9%) at 200 μg/mL. There are two peaks: one at a retention time of about 7.8 min (peak A) and represents 20% of the total integrated area. The other at about 9.6 min is the main peak (peak B) for 80% of the total integrated area. Figure 4b. represents the spectra obtained 24 months after obtention of the solution. The peak A has disappeared (integration inferior to 2%). It underlies the degradation of unstable compounds produced by known synthesis method.

**Figure 5** represents Infrared spectra of DAC products. FTIR of dextran polymers (DAC) comprising carboxymethyl ether, sulfate and acetate groups obtained by known synthesis method suspended in aqueous saline solution (0.9%) at 200 μg/mL and freeze-dried at different times after suspension. Figure 5a. represents Infrared spectra obtained from the solid form of the DAC product at the end of synthesis. The band "A" at 3500 $cm^{-1}$ is attributed to the O-H stretching of the free hydroxyl moieties. Band "B" at 1740 $cm^{-1}$ likely corresponds to the C=O stretch of mixed anhydrides. Band "C" at 1590 $cm^{-1}$ likely correspond to the C=O stretch of acetate group. Band "D" at 1225 $cm^{-1}$

corresponds to the S=O stretching of sulfate moieties. Figure 5b. represents infrared spectra obtained from the DAC product after 24 months (two years) in aqueous saline solution then then freeze-dried for analysis. The band at B disappears in favor of the band C underlying the disappearance of unstable mixed anhydrides with the known synthesis method.

**Figure 6** represents the spectra of $^1$H 400 MHz NMR of a powdered dextran polymers (DAC) comprising carboxymethyl ether, sulfate - and acetate groups obtained by known synthesis method suspended at the end of synthesis. Figure 6a represents the spectra obtained from powdered dextran polymers (DAC) comprising carboxymethyl-, sulfate - and acetate groups obtained by known synthesis method at the end of synthesis suspended to solution in $D_2O$ for analysis. Figure 6a. represents the spectra obtained 24 months after suspension of the dextran polymers (DAC) comprising carboxymethyl ether, sulfate and acetate groups obtained by known synthesis method suspended in aqueous saline solution, lyophilized and then resuspended in $D_2O$. Peaks "A" from 1.5 to 2.5 ppm correspond to acetate and acetyl groups. Peaks "B" from 3.50 ppm to 4.70 ppm correspond to CH hydrogens of carbons C2, C3 and C4 of the pyranose rings, as well as the $CH_2$ hydrogens of the C6 carbon. Peaks "C" corresponds to CH hydrogens of carbons C1 of the pyranose rings. Ordinate represents the intensity of the $^1$H NMR signals (AU), abscissa represents the chemical shift of 1H NMR signals (ppm). The peak "b" (s, 2.00 ppm) corresponds to the $CH_3$ of acetylsulfates. The peak "c" (s, 2.13 ppm) corresponds to the $CH_3$ of acetate groups. The peak "d" (s, 2.23 ppm) corresponds to unstable mixed anhydrides. Peak "e" at 5.16 ppm corresponds to the CH hydrogen of the C1 position of the glucose units bearing a carboxymethyl group at its C2 position. Peak "f" at 5.34 ppm corresponds to the CH hydrogen of the C1 position of the glucose units bearing a sulfate group at its C2 position. Figure 6b. represents the $^1$H NMR spectrum of dextran polymers (DAC) comprising carboxymethyl-, sulfate - and acetate groups obtained by known synthesis method, in aqueous saline solution (0,9%) 24 months after synthesis, freeze-dried and redissolved in $D_2O$ for analysis. Peak "a" ($CH_3$, s, 1,90 ppm) corresponds to free acetate in solution. After 24 months in aqueous saline solution, the peak "d" disappears in favor of the peak "b" at 2.0 ppm of acetylsulfate group and the peak "a" of free acetate at 1.90 ppm. It indicates a degradation of unstable mixed anhydrides into free acetylsulfate and free acetate.

**Figure 7** represents the spectra of $^1$H 400 MHz NMR of "A" peaks (acetates) of dextran polymers (DAC) comprising carboxymethyl ether, sulfate - and acetate groups obtained by known synthesis method at the end of synthesis or 24 after. As the products are statistical polymers, the NMR peaks are not sharp. The peaks that are sharp are small molecules typically side-products Figure 7a. represents the spectra of $^1$H NMR of the peaks "A" at the end of synthesis of dextran polymers (DAC) comprising carboxymethyl ether, sulfate and acetate groups dissolved in $D_20$ (8 mg/mL) for analysis. Sharp peak "a" (CH3, s, 1,90 ppm) corresponds to free acetate in solution. The sharp peak "b" (s, 2.00 ppm) corresponds to the $CH_3$ of free acetylsulfates. The peak "c" (s, 2.13 ppm) corresponds to the $CH_3$ of acetyl groups. Figure 7b. represents the spectrum of $^1$H NMR of sodium acetate. Peak "a" (CH3, s, 1,90 ppm) is attributed to free acetate in solution. Figure 7c. represents the $^1$H NMR 400 MHz spectrum of dextran polymers (DAC) comprising carboxymethyl ether, sulfate and acetate groups produced by known synthesis method dissolved in $D_20$ (8 mg/mL). The peak "b" (s, 2.00 ppm) corresponds to the $CH_3$ of acetylsulfates. The peak "c" (s, 2.13 ppm) corresponds to the $CH_3$ of acetyl groups. The peak "d" (s, 2.23 ppm) corresponds to unstable mixed anhydrides. Figure 7d. represents the spectra of $^1$H NMR, NMR reference of acetyl sulfate prepared according to U.S. Patent No 3,870,841, 11 mars 1975 [3] in deuterated chloroform. Peak "b" is attributed to acetyl sulfate Figure 7e represents the spectra of $^1$H NMR, NMR reference of acetic acid anhydride (Weiley data bank). Ordinate represents the intensity of the $^1$H NMR signals (AU), abscissa represents the chemical shift of $^1$H NMR signals (ppm) Peak "d" (s, 2.23 ppm) is attributed to $CH_3$ of mixed anhydrides.

**Figure 8** represents Infra-Red spectrum of dextran polymers (DAC) obtained by an example of the method of the invention (batch 1). Ordinate represents the transmittance in percent and abscissa represents the wave number in $cm^{-1}$. The band "A" at 3500 $cm^{-1}$ is attributed to the O-H stretching of the free hydroxyl groups. The absence of band "B" at 1740 $cm^{-1}$ corresponding to the C=O stretch of mixed anhydrides shows the absence of these unstable groups in DAC obtained by an example of the method of the invention. Band "C" at 1590 $cm^{-1}$ likely corresponds to the C=O stretch of acetate group. Band "D" at 1225 $cm^{-1}$ corresponds to the S=O stretching of sulfate groups.

**Figure 9** represents Infra-Red spectrum of stable DAC product obtained by the method of the invention (batch 2). Ordinate represents the transmittance in percent and abscissa represents the wave number in $cm^{-1}$. The band "A" at 3500 $cm^{-1}$ is attributed to the O-H stretching of the free hydroxyl groups. The absence of band "B" at 1740 $cm^{-1}$ corresponding to the C=O stretch of mixed anhydrides shows the absence of these unstable groups in DAC obtained by the method of the invention. Band "C" at 1590 $cm^{-1}$ correspond to the C=O stretch of acetate group. Band "D" at 1225 $cm^{-1}$ likely corresponds to the S=O stretching of sulfate groups.

**Figure 10** represents Infra-Red spectrum of stable DAC product obtained by the method of the invention (batch 3). Ordinate represents the transmittance in percent and abscissa represents the wave number in $cm^{-1}$. The band "A" at 3500 $cm^{-1}$ is attributed to the O-H stretching of the free hydroxyl groups. The absence of band "B" at 1740 $cm^{-1}$ corresponding to the C=O stretch of mixed anhydrides shows the absence of these unstable groups in DAC obtained by the method of the invention. Band "C" at 1590 $cm^{-1}$ likely corresponds to the C=O stretch of acetate group. Band "D"

at 1225 $cm^{-1}$ likely corresponds to the S=O stretching of sulfate groups.

**Figure** 11 is a size exclusion chromatography (SEC-HPLC) chromatogram of stable DAC product obtained by an example of the method of the invention (batch 1), suspended in aqueous saline solution (0.9%) at 100 μg/mL. The HPLC analysis was done 2 times with the same results. HPLC elution conditions: Column: SEC Shodex 804, injected volume: 100 μL, eluent: $CuSO_4$ 100 mM and NaCl 50 mM, column temperature: 40°C, flow rate: 0.8 mL/min. No unstable compound is produced by the method of the invention. The peak "A" at 9.0 min corresponds to the DAC product. The peak "B" at 7.5 min corresponds to residual unstable compounds and represents less than 2% of the integrated area. This figure clearly shows that the method of the invention allows the production of stable DAC compounds.

**Figure 12** is a SEC-HPLC chromatogram of stable DAC product obtained by an example of the method of the invention (batch 2). SEC-HPLC chromatogram of dextran polymers (DAC) comprising carboxymethyl ether, sulfate and acetate groups obtained by an example of the method of the invention (batch 2), suspended in aqueous saline solution (0.9%) at 100 μg/mL. The HPLC analysis was done 2 times with the same results. HPLC elution conditions: Column: SEC Shodex 804, injected volume: 100 μL, eluent: CuSO4 100 mM and NaCl 50 mM, column temperature: 40°C, flow rate: 0.8 mL/min. The peak "B" at 7.4 min represents less than 5% of the total integrated surface and corresponds to unstable compounds. No unstable compound is produced by the method of the invention. The peak "A" at 9.0 min corresponds to the DAC product.

**Figure 13** is a SEC-HPLC chromatogram of DAC products (batch 3). SEC-HPLC chromatogram of stable DAC product obtained by an example of the method of the invention (batch 3), suspended in aqueous saline solution (0.9%) at 100 μg/mL. The HPLC analysis was done 2 times with the same results. HPLC elution conditions: Column: SEC Shodex 804, injected volume: 100 μL, eluent: CuSO4 100 mM and NaCl 50 mM, column temperature: 40°C, flow rate: 0.8 mL/min. The peak "B" at 7.5 min represents less than 5% of the total integrated surface and corresponds to unstable compounds. No unstable compound is produced by the method of the invention. The peak "A" at 8.918 min corresponds to the DAC product.

**Figure 14** is a spectrum of $^1$H 400 MHz NMR spectrum of DAC product (batch 1). 1H 400 MHz NMR spectrum stable DAC product obtained by an example of the method of the invention (batch 1), suspended in $D_2O$ at the end of synthesis (8 mg/mL). As the products are statistical polymers, the NMR peaks are not sharp. The peaks that are sharp are small molecules typically side-products. Peaks "A" from 1.5 to 2.5 ppm correspond to acetate and acetyl groups. Peaks "B" from 3.50 ppm to 4.70 ppm correspond to CH hydrogens of carbons C2, C3 and C4 of the pyranose rings, as well as the $CH_2$ hydrogens of the C6 carbon. Peaks "C" corresponds to CH hydrogens of carbons C1 of the pyranose rings. Ordinate represents the intensity of the $^1$H NMR signals (AU), abscissa represents the chemical shift of $^1$H NMR signals (ppm). The peak "b" (s, 2.00 ppm) corresponds to the $CH_3$ of acetylsulfates. The peak "c" (s, 2.13 ppm) corresponds to the $CH_3$ of acetyl moieties. It is possible to integrate the signals of peaks A (CH hydrogens of the C1 position) as 1.00. The relative integration of the peak "c" of the acetate groups divided by 3 gives the acetylation index (mean number of acetate group per glucose unit), here 0.09. The absence of a peak "d" at 2.23 ppm shows the absence of unstable mixed anhydrides. Peak "e" at 5.16 ppm corresponds to the CH hydrogen of the C1 position of the glucose units bearing a carboxymethyl group at its C2 position. Peak "f" at 5.34 ppm corresponds to the CH hydrogen of the C1 position of the glucose units bearing a sulfate group at its C2 position.

**Figure 15** is a spectrum of $^1$H 400 MHz NMR spectrum of DAC product (batch 2). $^1$H 400 MHz NMR spectrum of stable DAC product obtained by an example of the method of the invention (batch 2), suspended in $D_2O$ at the end of synthesis (8 mg/mL). As the products are statistical polymers, the NMR peaks are not sharp. The peaks that are sharp are small molecules typically side-products. Peaks "A" from 1.5 to 2.5 ppm correspond to acetate and acetyl groups. Peaks "B" from 3.50 ppm to 4.70 ppm correspond to CH hydrogens of carbons C2, C3 and C4 of the pyranose rings, as well as the $CH_2$ hydrogens of the C6 carbon. Peaks "C" corresponds to CH hydrogens of carbons C1 of the pyranose rings. Ordinate represents the intensity of the $^1$H NMR signals (AU), abscissa represents the chemical shift of 1H NMR signals (ppm). The peak "b" (s, 2.00 ppm) corresponds to the $CH_3$ of acetylsulfates. The peak "c" (s, 2.13 ppm) corresponds to the $CH_3$ of acetyl moieties. It is possible to integrate the signals of peaks A (CH hydrogens of the C1 position) as 1.00. The relative integration of the peak "c" of the acetate groups divided by 3 gives the acetylation index (mean number of acetate group per glucose unit), here 0.09. The absence of a peak "d" at 2.23 ppm shows the absence of unstable mixed anhydrides. Peak "e" at 5.16 ppm corresponds to the CH hydrogen of the C1 position of the glucose units bearing a carboxymethyl group at its C2 position. Peak "f" at 5.34 ppm corresponds to the CH hydrogen of the C1 position of the glucose units bearing a sulfate group at its C2 position.

**Figure 16** is a spectrum of $^1$H 400 MHz NMR spectrum of DAC product (batch 3). $^1$H 400 MHz NMR spectrum of stable DAC product obtained by an example of the method of the invention (batch 3), suspended in $D_2O$ at the end of synthesis (8 mg/mL). As the products are statistical polymers, the NMR peaks are not sharp. The peaks that are sharp are small molecules typically side-products. Peaks "A" from 1.5 to 2.5 ppm correspond to acetate and acetyl groups. Peaks "B" from 3.50 ppm to 4.70 ppm correspond to CH hydrogens of carbons C2, C3 and C4 of the pyranose rings, as well as the $CH_2$ hydrogens of the C6 carbon. Peaks "C" corresponds to CH hydrogens of carbons C1 of the pyranose

rings. Ordinate represents the intensity of the $^1H$ NMR signals (AU), abscissa represents the chemical shift of 1H NMR signals (ppm). The peak "b" (s, 2.00 ppm) corresponds to the $CH_3$ of acetylsulfates. The peak "c" (s, 2.13 ppm) corresponds to the $CH_3$ of acetyl moieties. It is possible to integrate the signals of peaks A (CH hydrogens of the C1 position) as 1.00. The relative integration of the peak "c" of the acetate groups divided by 3 gives the acetylation index (mean number of acetate group per glucose unit), here 0.09. The absence of a peak "d" at 2.23 ppm shows the absence of unstable mixed anhydrides. Peak "e" at 5.16 ppm corresponds to the CH hydrogen of the C1 position of the glucose units bearing a carboxymethyl group at its C2 position. Peak "f" at 5.34 ppm corresponds to the CH hydrogen of the C1 position of the glucose units bearing a sulfate group at its C2 position.

**Figure 17** represents the superposition of $^1H$ 400 MHz NMR spectrum spectra of DAC. $^1H$ 400 MHz NMR spectrum stable DAC product obtained by an example of the method of the invention (all batches), suspended in $D_2O$ at the end of synthesis (8 mg/mL). As the products are statistical polymers, the NMR peaks are not sharp. The peaks that are sharp are small molecules typically side-products. Peaks "A" from 1.5 to 2.5 ppm correspond to acetate and acetyl groups. Peaks "B" from 3.50 ppm to 4.70 ppm correspond to CH hydrogens of carbons C2, C3 and C4 of the pyranose rings, as well as the $CH_2$ hydrogens of the C6 carbon. Peaks "C" corresponds to CH hydrogens of carbons C1 of the pyranose rings. Ordinate represents the intensity of the $^1H$ NMR signals (AU), abscissa represents the chemical shift of $^1H$ NMR signals (ppm). The peak "b" (s, 2.00 ppm) corresponds to the $CH_3$ of acetylsulfates. The peak "c" (s, 2.13 ppm) corresponds to the $CH_3$ of acetyl moieties. The absence of a peak "d" at 2.23 ppm shows the absence of unstable mixed anhydrides. Peak "e" at 5.16 ppm corresponds to the CH hydrogen of the C1 position of the glucose units bearing a carboxymethyl group at its C2 position. Peak "f" at 5.34 ppm corresponds to the CH hydrogen of the C1 position of the glucose units bearing a sulfate group at its C2 position. The syntheses show a good reproducibility as all 3 batches have superimposable NMR profile.

**Figure 18** represents the characterization of the acetyl index of a DAC produced with the method of the invention with a lower quantity of acetylation agent used (7.5 equiv.). $^1H$ 400 MHz NMR spectrum of stable DAC product obtained by an example of the method of the invention with a lower quantity of acetylation agent (7.5 equiv.), suspended in $D_2O$ at the end of synthesis (8 mg/mL). Peaks "A" from 1.5 to 2.5 ppm correspond to acetate and acetyl groups. As the products are statistical polymers, the NMR peaks are not sharp. The peaks that are sharp are small molecules typically side-products. Peaks "B" from 3.50 ppm to 4.70 ppm correspond to CH hydrogens of carbons C2, C3 and C4 of the pyranose rings, as well as the $CH_2$ hydrogens of the C6 carbon. Peaks "C" corresponds to CH hydrogens of carbons C1 of the pyranose rings. Ordinate represents the intensity of the $^1H$ NMR signals (AU), abscissa represents the chemical shift of $^1H$ NMR signals (ppm). The peak "b" (s, 2.00 ppm) corresponds to the $CH_3$ of acetylsulfates. The peak "c" (s, 2.13 ppm) corresponds to the $CH_3$ of acetyl moieties. It is possible to integrate the signals of peaks A (CH hydrogens of the C1 position) as 1.00. The relative integration of the peak "c" of the acetate groups divided by 3 gives the acetylation index (mean number of acetate group per glucose unit), here 0.02. The absence of a peak "d" at 2.23 ppm shows the absence of unstable mixed anhydrides. Peak "e" at 5.16 ppm corresponds to the CH hydrogen of the C1 position of the glucose units bearing a carboxymethyl group at its C2 position. Peak "f" at 5.34 ppm corresponds to the CH hydrogen of the C1 position of the glucose units bearing a sulfate group at its C2 position. The acetyl index is lower (0.023) and dependent of the quantity of acetylation agent used.

**Figure 19** represents the spectrum of $^1H$ 400 MHz NMR spectrum dextran polymers (DAC) comprising carboxymethyl ether, sulfate and acetate groups obtained by the synthesis method of the invention with a lower quantity of acetylation agent (11 equiv.), suspended in $D_2O$ at the end of synthesis (8 mg/mL). As the products are statistical polymers, the NMR peaks are not sharp. The peaks that are sharp are small molecules typically side-products. Peaks "A" from 1.5 to 2.5 ppm correspond to acetate and acetyl groups. Peaks "B" from 3.50 ppm to 4.70 ppm correspond to CH hydrogens of carbons C2, C3 and C4 of the pyranose rings, as well as the $CH_2$ hydrogens of the C6 carbon. Peaks "C" corresponds to CH hydrogens of carbons C1 of the pyranose rings. Ordinate represents the intensity of the $^1H$ NMR signals (AU), abscissa represents the chemical shift of $^1H$ NMR signals (ppm). The peak "b" (s, 2.00 ppm) corresponds to the $CH_3$ of acetylsulfates. The peak "c" (s, 2.13 ppm) corresponds to the CH3 of acetyl moieties. It is possible to integrate the signals of peaks A (CH hydrogens of the C1 position) as 1.00. The relative integration of the peak "c" of the acetate groups divided by 3 gives the acetylation index (mean number of acetate group per glucose unit), here 0.05. The absence of a peak "d" at 2.23 ppm shows the absence of unstable mixed anhydrides. Peak "e" at 5.16 ppm corresponds to the CH hydrogen of the C1 position of the glucose units bearing a carboxymethyl group at its C2 position. Peak "f" at 5.34 ppm corresponds to the CH hydrogen of the C1 position of the glucose units bearing a sulfate group at its C2 position. The acetyl index is lower (0.053) and dependent of the quantity of acetylation agent used.

## Examples

## Example 1: Sulfation and acetylation of a compound having one or more hydroxyl group

In the present example, the compound having one or more hydroxyl group used as starting material was

carboxymethyldextran obtained from Laboratoire Synth-Innov and produced according to Papy et al. 2005 [4]. Briefly, Dextran 40 USP (300 g, 1.85 mol of glucose) was dissolved in 1460 mL of water, and separately, 592 g of NaOH (14.3 mol) was dissolved in 590 mL of water. Both solutions were cooled to 4 °C. The NaOH solution (Sigma-Aldrich) was slowly poured into the dextran solution under stirring and controlling temperature not to exceed 15 °C. The reaction mixture was stirred for 20 min and then allowed to cool at 4 °C. Monochloroacetic acid (613 g, 6.5 mol) was added in small portions with controlling reaction temperature <20 °C, and then the reaction mixture was stirred at 50 °C during 40 min. The reaction was then quenched by slow addition (drop by drop) of acetic acid to pH 7. Before sulfation and acetylation, the carboxymethyldextran was acidified on an Amberlite IR-120 resin (Sigma-Aldrich) prior to the synthesis.

Table 2: meaning of the abbreviations used:

| | |
|---|---|
| 2M2B | 2-methyl-2-buten |
| CMDH+ | Carboxymethyldextran, hydrogen form |
| CMDSA | Sulfated acetylated carboxymethyldextran |
| DMF | Dimethylformamide |
| dsAc | Acetylation index |
| dsCM | Carboxymethylation index |
| dsS | Sulfation index |
| Eq | Equivalent number |
| GLP | Good laboratory practices |
| GMP | Good manufacturing practices |
| HPLC | High precision chromatography |
| IPC | In process control |
| IR | Infra-red |
| MW | Molecular weight |
| N.B. | *Nota bene* |
| QSP | *Quantum satis* |
| SEC | Size exclusion chromatography |
| Specs | Specifications |
| V | Volume |

Table 3: List of the materials/compounds used and quantity

| Product/materiel name | Supplier | CAS/Reference | Quantity |
|---|---|---|---|
| Carboxymethyl dextran T40 | Previous synthesis as described in Papy et al., 2005 [4] | NA | 10 g |
| Sulphur trioxide - N,N-dimethylformamid e complex | Sigma-Aldrich | 29584-42-7 / 373680 | 4 g |
| Acetic anhydride | Sigma-Aldrich | 108-24-7 / 320102-1L | 35 mL |
| Formamide | Sigma-Aldrich | 75-12-7 / F7503-500ML | 120 mL |
| N,N-dimethylformamid e | Sigma-Aldrich | 68-12-2 / 5895652000 | 500 mL |
| 2-methyl-2-buten | Sigma-Aldrich | 513-35-9/86262-1L-F | 120 mL |
| 2L round bottom flask | Fisher (Pyrex) | 12549975 | 1 |
| Stand: Base Shaft | Fisher (Bochem) | 10678101<br>10730052 | 1<br>1 |
| Magnetic stirrer | Fisher (Heidolph) | 10483443 | 1 |
| Magnetic bar | Fisher (Brand) | 11792513 | 1 |

(continued)

| Product/materiel name | Supplier | CAS/Reference | Quantity |
|---|---|---|---|
| Bubbler | Sigma-Aldrich | SYN B257040-1EA | 1 |
| Mineral oil | Fisher (Huber) | 11527374 | |
| Peristaltic pump | Millipore | XX8200230 | 1 |
| Freeze-dryer | Freezone Triad | 7400030 | 1 |
| Ultrafiltration unit | Millipore | Pellicon 2 cassette holder | 1 |

Table 4 : composition of the bicarbonate solution 1 M: solution 1

| | CAS | Weight/volume | Final concentration |
|---|---|---|---|
| Sodium bicarbonate | 5144-55-8 | 252 g ± 5 g | 1 M |
| water | 7732-18-5 | 3 L ± 300 mL | |

For sulfation and acetylation the used recipient was a 2 L round bottom flask (Fisher (Pyrex)).
The method of sulfation and acetylation was carried out in a single batch/pot.

Table 5 discloses the parameters of the carboxymethyldextran obtained from Laboratoire Synth-Innov and produced according to Papy et al. 2005 [4].

| Starting material | A monomer | Molar weight of the A monom er | Rate "x" of substituti on of the X group | X group | Molar weight of the X group | Molar weight of the monome r of formula (II) | Eq. (1) of reactive OH species | Eq. of monome r |
|---|---|---|---|---|---|---|---|---|
| Carboxy -methyl-dextran | glucose | 162 g/mol | 44 % | Carbo xy-methy l- | 58 g/mol | 187,52 g/mol | 2.56 | 1 |
| (1) Eq.=equivalents | | | | | | | | |

The determination of the equivalents for the present example 1 is explained in table 5. The molar weight of the starting material was calculated according to the following formula (III):

$$MW = Mw(A)+Mw(X)*x \quad (III)$$

wherein, the monomer A is glucose linked with an α1,6-O-glycosidic bound, the molecular weight Mw(A) is 162 g/mol, the group X is carboxymethyl group of formula $-CH_2COOH$. Its molecular weight Mw(X) is 58 g/mol.
The rate of substitution x of the carboxymethyl group X is 44%.
The molar weight (MW) of the monomer of formula (I) for example 1 was calculated as follows:

$$\mathrm{MW} = Mw(A) + Mw(X) \times x = 162 + 58 \times 0.44 = 187.52\ g/mol$$

This molar weight of monomer of formula (II) was used to calculate the molar concentration of the starting material: polymer of formula (I).
In the present example 1, the starting material was added at 10 g in 750 mL of a mix of formamide, N,N-dimethylformamide and 2-methyl-2-buten. The molar quantity of starting material carboxymethyl dextran was 1000*10/187.52 = 53.3 mmol. This quantity was defined as 1 equivalent in the present example 1.
In this example, the quantity of free hydroxyl per monomer is 2.56. These are the reactive functions of the polymers.
A heating magnetic stirrer Fisher (Heidolph) with an oil bath was used. The oil bath kettle was filled to the 2/3 with a mineral oil, a bubbler (Sigma-Aldrich, commercial referenced SYNB257040-1 EA) was filled with glycerol on one of the necks was fixed. The other two were closed with rubber septa. A magnetic bar was insert in the flask and the oil bath was

preheated at 30°C. 10 g of carboxymethyldextran (CMD) was added it in the flask and 125 mL of formamide (Sigma-Aldrich, CAS reference 75-12-7 / F7503-500ML) was added in the flask. The solution was stirred until complete solubilization of the CMD. 500 mL of N,N-dimethylformamide (DMF) (Sigma-Aldrich, Cas reference 68-12-2 / 5895652000) were added. The solution was heated until the temperature of the solution has reached 30°C. 125 mL of 2-methyl-2-butene were added. 40 g of sulphur trioxide/N,N-dimethylformamide complex ($SO_3$/DMF) (Sigma-Aldrich, CAS reference 29584-42-7 / 373680) were added into the flask. The solution was stirred at 30°C $\pm$ 5°C for 70min $\pm$ 10min. Then 60 mL of acetic anhydride (Sigma-Aldrich, Cas reference 108-24-7 / 320102-1L) were added to the solution. The solution was stirred at 30°C $\pm$ 5°C for 70min $\pm$ 10min. The gas bubbler and all the septa were removed. 2,5 L of sodium bicarbonate 1 M were then added to the solution in 10 min. The pH of the solution was measured with pH paper at pH=8. The solution was then stirred at 40°C $\pm$ 5°C for 24h $\pm$ 4h. The obtained stirred solution was then transferred to the tank of the ultrafiltration unit ÄKTA flux s, cytiva and concentrated 116 g of sodium chloride were added, and the solution stirred at ambient temperature, i.e. 20°C for 20 min $\pm$ 10min. The obtained solution was then filtrated with a diafiltration technique against MilliQ water until the filtrate has resistivity superior to 200 k$\Omega$ and with a minimum volume of MilliQ water of 40 L. The ultrafiltration cassette used was a from Millipore with commercial reference Pellicon 2 regenerated cellulose P2C010C05.

The product obtained was then concentrated. The influx of renewed MilliQ of the diafiltration was stopped until the volume was equal or inferior to 100 mL. The resistivity of the concentrated product was over 150 k$\Omega$. The concentrated product was then recovered and transferred in an adapted container for freeze-drying at -20°C over-night or 2h at -80°C. When the obtained product was freeze-drying, the parameters were temperature: -15°C, cold trap temperature: -80°C and pressure: 36 $\mu$bar.

The obtained product was white homogenous foam and is RGTA OTR4132. In other words, the compound obtained is RGTA OTR4132.

The above-mentioned process was repeated three times (Batches 1 to 3). The obtained batches were analysed. The obtained product/batch was in form of a white powder. The batch comprise/correspond to the compounds obtained by the method of the invention. In other words, the batch comprises compound being sulfated and acetylated according to the method of the present invention. The obtained compound comprises carboxymethyl ether, sulfate and acetate groups. Figures 8 to 10 represent respectively the infra-red spectra of the obtained batches of compound comprises carboxymethyl ether, sulfate and acetate groups, in particular dextran polymers comprising carboxymethyl ether, sulfate and acetate groups obtained by the method of the invention (batch 1 to 3). Figures 11 to 13 represents respectively chromatographic spectra of dextran polymers comprising carboxymethyl-, sulfate - and acetate groups obtained by the method of the invention (batch 1 to 3).

Figure 14 represents spectrum of $^1$H 400 MHz NMR of dextran polymers comprising carboxymethyl ether, sulfate and acetate groups obtained by the method of the invention (batch 1). As the products are statistical polymers, the NMR peaks are not sharp. The peaks that are sharp are small molecules typically side-products. Peaks "A" from 1.5 to 2.5 ppm correspond to acetate and acetyl groups. Peaks "B" from 3.50 ppm to 4.70 ppm correspond to CH hydrogens of carbons C2, C3 and C4 of the pyranose rings, as well as the $CH_2$ hydrogens of the C6 carbon. Peaks "C" corresponds to CH hydrogens of carbons C1 of the pyranose rings. Ordinate represents the intensity of the $^1$H NMR signals (AU), abscissa represents the chemical shift of $^1$H NMR signals (ppm). The peak "b" (s, 2.00 ppm) corresponds to the $CH_3$ of acetylsulfates. The peak "c" (s, 2.13 ppm) corresponds to the $CH_3$ of acetyl moieties. It is possible to integrate the signals of peaks A (CH hydrogens of the C1 position) as 1.00. The relative integration of the peak "c" of the acetate groups divided by 3 gives the acetylation index (mean number of acetate group per glucose unit), here 0.09. The absence of a peak "d" at 2.23 ppm shows the absence of unstable mixed anhydrides. Peak "e" at 5.16 ppm corresponds to the CH hydrogen of the C1 position of the glucose units bearing a carboxymethyl group at its C2 position. Peak "f" at 5.34 ppm corresponds to the CH hydrogen of the C1 position of the glucose units bearing a sulfate group at its C2 position. Overall, this figure clearly shows that the DAC produced by the method of the invention allows to produce a stable compound without any unstable mixed anhydride or its degradation products as acetylsulfate and acetate.

Figure 15 represents spectrum of $^1$H 400 MHz NMR of dextran polymers comprising carboxymethyl ether, sulfate and acetate groups obtained by the method of the invention (batch 2). As the products are statistical polymers, the NMR peaks are not sharp. The peaks that are sharp are small molecules typically side-products. Peaks "A" from 1.5 to 2.5 ppm correspond to acetate and acetyl groups. Peaks "B" from 3.50 ppm to 4.70 ppm correspond to CH hydrogens of carbons C2, C3 and C4 of the pyranose rings, as well as the $CH_2$ hydrogens of the C6 carbon. Peaks "C" corresponds to CH hydrogens of carbons C1 of the pyranose rings. Ordinate represents the intensity of the $^1$H NMR signals (AU), abscissa represents the chemical shift of 1H NMR signals (ppm). The peak "b" (s, 2.00 ppm) corresponds to the $CH_3$ of acetylsulfates. The peak "c" (s, 2.13 ppm) corresponds to the $CH_3$ of acetyl moieties. It is possible to integrate the signals of peaks A (CH hydrogens of the C1 position) as 1.00. The relative integration of the peak "c" of the acetate groups divided by 3 gives the acetylation index (mean number of acetate group per glucose unit), here 0.09. The absence of a peak "d" at 2.23 ppm shows the absence of unstable mixed anhydrides. Peak "e" at 5.16 ppm corresponds to the CH hydrogen of the C1 position of the glucose units bearing a carboxymethyl group at its C2 position. Peak "f" at 5.34 ppm corresponds to

the CH hydrogen of the C1 position of the glucose units bearing a sulfate group at its C2 position. Overall, this figure clearly shows that the DAC produced by the method of the invention allows to produce a stable compound without any unstable mixed anhydride or its degradation products as acetylsulfate and acetate.

Figure 16 represents spectrum of $^1$H 400 MHz NMR of dextran polymers comprising carboxymethyl ether, sulfate and acetate groups obtained by the method of the invention (batch 3). As the products are statistical polymers, the NMR peaks are not sharp. The peaks that are sharp are small molecules typically side-products. Peaks "A" from 1.5 to 2.5 ppm correspond to acetate and acetyl groups. Peaks "B" from 3.50 ppm to 4.70 ppm correspond to CH hydrogens of carbons C2, C3 and C4 of the pyranose rings, as well as the $CH_2$ hydrogens of the C6 carbon. Peaks "C" corresponds to CH hydrogens of carbons C1 of the pyranose rings. Ordinate represents the intensity of the $^1$H NMR signals (AU), abscissa represents the chemical shift of 1H NMR signals (ppm). The peak "b" (s, 2.00 ppm) corresponds to the $CH_3$ of acetylsulfates. The peak "c" (s, 2.13 ppm) corresponds to the $CH_3$ of acetyl moieties. It is possible to integrate the signals of peaks A (CH hydrogens of the C1 position) as 1.00. The relative integration of the peak "c" of the acetate groups divided by 3 gives the acetylation index (mean number of acetate group per glucose unit), here 0.09. The absence of a peak "d" at 2.23 ppm shows the absence of unstable mixed anhydrides. Peak "e" at 5.16 ppm corresponds to the CH hydrogen of the C1 position of the glucose units bearing a carboxymethyl group at its C2 position. Peak "f" at 5.34 ppm corresponds to the CH hydrogen of the C1 position of the glucose units bearing a sulfate group at its C2 position. Overall, this figure clearly shows that the DAC produced by the method of the invention allows to produce a stable compound without any unstable mixed anhydride or its degradation products as acetylsulfate and acetate.

Figure 17 represents an overlapping of spectra of $^1$H 400 MHz NMR of dextran polymers comprising carboxymethyl ether, sulfate and acetate groups obtained by the method of the invention (batches 1-3).

As demonstrated in figure 17, the spectra of $^1$H 400 MHz NMR of figures 14-16 are superimposable which clearly demonstrated that the dextran polymers comprising carboxymethyl ether, sulfate and acetate groups obtained by an example of the method of the invention obtained from three different batch are identical. These results clearly demonstrate that the method is reproductible.

In particular, the yield, the titration of dextran polymers comprising carboxymethyl ether, sulfate and acetate groups of the obtained compound (polymer) were measured. An $^1$H RMN 400Mhz analysis was carried out to determine the acetylation index. The samples were dissolved in $D_2O$ and $^1$H RMN 400MHz were carried out on a Bruker Avance II 400 using residual $H_2O$ peak as a standard (4.7900 ppm). The peaks of anomeric protons (from 5.0 to 5.5 ppm) were used as internal standard of integration (integration of the signal=1.0) The quantification of the acetyl was done by integrating the signal from 2.05 to 2.25 ppm corresponding to the $CH_3$ of the acetate group. This integration is then divided by 3 to obtain the quantity of acetate per glucose unit.

The characterization of the sulfate and carboxymethyl indexes was carried out by acid-base titration. Briefly, between 5 and 15 mg of the product were weighted on a precision scale and the exact weight noted (test portion). This quantity was dissolved in 1.2 mL of UHQ water (Merck) and the obtained solution was passed on previously prepared Amberlite IR-120 (Sigma-Aldrich) resin column of about 10g, 2 times. 1 mL of UHQ water were used to rinse the Amberlite IR-120 (Sigma-Aldrich) and recover the full quantity of the product. The obtained acidified solution was then titrated on a Metrhom Titrino 848 (VWR) with a titrating solution of NaOH 0,94 M with the parameters as mentioned in table 6 below:

Table 6: titration conditions

| Starting conditions | |
|---|---|
| Impulsion activation | Off |
| Starting pause | 240 s |
| Starting volume | 0.00000 mL |
| flowrate | 0.9 mL/min |
| pause | 0s |
| Ask for sample ID | Off |
| Ask for sample weight | Off |
| Ask for sample weight unit | Off |
| Pause on demand | On |
| Titration parameters | |
| Titration speed | Utilisat. |
| Volume increments | 0.00005 mL |

(continued)

| | |
|---|---|
| Titration parameters | |
| Titration flowrate | 0.1 mL/min |
| Signal drift | 50.0 mV/min |
| Min. waiting time | 1s |
| Max. waiting time | 26s |
| temperature | 23.2 °C |
| Sensor | pH electrode |
| Solution | undefined |
| Stirring speed | 6 |
| Stopping conditions | |
| Stopping volume | 2 mL |
| Stopping pH val. | 11 |
| Stopping EP | 9 |
| Volume after EP | Off |
| Stopping time | Off |
| Filling flowrate | Max. mL/min |
| Reports | |
| Results | Off |
| Curve | Off |
| Calculations/statistics | Off |
| List of measurement points | Off |
| Parameters | Off |
| PC/LIMS | On |

The equivalence volumes are found at pH 4.0 for the sulfate group and at pH 7.0 for the carboxymethyl group. The sulfate indexes are obtained through the following calculus:

$$ds_S = Qs_S \times 0{,}001 \times MW_{glc}$$

With :

dss = sulphation level (sulphate per glucose unit)
Qss = quantity of substance of sulphate per mg of polymer (mmol/mg)
$MW_{glc}$ = molecular weight of the glucose unit (mg/mmol) (here 231,35)

The carboxymethylation level of a polymer is calculated with the following formula:

$$ds_{CM} = Qs_{CM} \times 0{,}001 \times MW_{glc}$$

With:

$ds_{CM}$ = carboxymethyl level (carboxymethyl per glucose unit)
$Qs_{CM}$ = quantity of substance of carboxymethyl per mg of polymer (mmol/mg)
MWglc = molecular weight of the glucose unit (mg/mmol) (here 231,35)

And with:

$$Qs_S = \frac{C_{NaOH} \times Veq_1}{P_E}$$

With :

QsS = quantity of substance of sulphate per mg of polymer (mmol/mg)
$C_{NaOH}$ = concentration of titrating NaOH solution (M)
$Veq_1$ = first volume at the equivalence (mL)
PE = test portion of the compound titrated (mg)

And

$$Qs_{CM} = \frac{C_{NaOH} \times Veq_2}{P_E}$$

With :

$Qs_{CM}$ = quantity of substance of carboxymethyl per mg of polymer (mmol/mg)
$C_{NaOH}$ = concentration of titrating NaOH solution (M)
$Veq_2$ = first volume at the equivalence (mL)
$P_E$ = test portion of the compound of the polymer titrated (mg)

The characterization of the acetylation index was carried out by colorimetric quantification as described in McComb and McCready (MCCOMB, Elizabeth A. et MCCREADY, R. M. Determination of acetyl in pectin and in acetylated carbohydrate polymers. Analytical Chemistry, 1957, vol. 29, no 5, p. 819-821 [5]). Briefly, 25 mL of HCl 0,1 M were prepared. 10 mL of a 1:1 $NH_2OH$/NaOH solution were prepared.

An acid solution of methanol was prepared as follows:
In a 10 mL volumetric flask, about 3 mL of methanol were added, 0,500 mL of HCl 37 % was added and the volume was completed with methanol.

A control solution of α-D-glucosepentaacetate (T1 solution), 0.1 mg/mL was prepared. The samples are prepared at the concentration of 0.1 mg/mL.

A solution of iron III chloride was prepared as follows:0,506 g of Iron III chloride anhydrous were weighted and dissolved in 20 mL of HCl 0.1 M solution.

The blank solution was prepared as follows: to 150 mL of UHQ water, 40 μL of the hydroxylamine hydrochloride solution were added. This solution will be called BL2 solution.

The α-D-glucosepentaacetate control solution (T2 solution) was prepared as follows: To 50 mL of UHQ water, 40 μL of the hydroxylamine hydrochloride solution was added and 100 μL of the T1 solution (α-D-glucosepentaacetate). This solution will be called T2 solution.

The samples were prepared as follows: to 50 μL of UHQ water, 40 μL of NH2OH/NaOH were added.

The sample solutions, the blank solution (BL2) and the T2 solution were stirred for 30 min at 20°C.

In each of these solutions, 100 μL of acid methanol solution were added then 710 μLof the iron III chloride solution. In a Greiner 96 well plaque (Sima-Aldrich), 200 μL per well of each tube. Fill 4 wells per tube: the blank solution, the T2 solution and each sample solution.

Read the absorbance at 510 nm with a UV/vis spectrometer (TECAN Spark spectrophotometer) a microplate reader.

The acetylation index is calculated with the following equation:

$$ds_{Ac} = \frac{P_T \times A_E \times M_{Wglc} \times 5}{P_E \times A_T \times M_{WT2}}$$

With:

$ds_{Ac}$ = acetylation index (acetyl/glucose unit)
$P_T$ = test portion of α-D-glucose pentaacetate (mg)
$A_E$ = absorbance of sample solution (UA)

$MW_{glc}$ = Molecular weight of a glucose unit (mg/mmol)
$P_E$ = test portion of the sample (mg)
$A_T$ = absorbance of the $\alpha$-D-glucose pentaacetate solution (UA)
$M_{WT2}$ = molecular weight of $\alpha$-D-glucose pentaacetate (mg/mmol)

The molecular weight of a glucose unit is calculated with:

$$M_{Wglc} = 162{,}1 + (102{,}07 \times ds_S) + (80{,}03 \times ds_{CM}) + (42{,}052 \times ds_{Ac})$$

) With:

dss = sulphate level (sulphate/glucose unit)
$ds_{CM}$ = caboxymethyl level (carboxymethyl/glucose unit)
$ds_{Ac}$ = acetylation index (acetyl/glucose unit)

The sulphate level and the carboxymethyl level are obtained by titration. The acetyl level can be approximated to 0,10. A standard molecular weight of glucose unit in OTR4132 is 304 g/mol (with dss=1,0 ; $ds_{CM}$=0,45 ; $ds_{Ac}$=0,10) With the conditions of this protocol, the equation for finding the acetylation index is:

$$ds_{Ac} = \frac{1{,}6.\,10^{-6} \times A_E \times 304 \times 5}{80.\,10^{-3} \times A_T \times 390{,}33}$$

The determination of the molecular weight of the obtained product was also carried out as follows by SEC-RALS/LALS (column: Shodex SB-804 HQ, HPLC: Malvern Omnicec-Resolve-Reveal) chromatography.
On a SEC-RALS/LALS chromatography, equipped with a Shodex 804-SB SEC column, the following parameters are used for SEC analysis:

- Injection volume: 300 $\mu$L (Full Loop mode)
- Column: 2x ALS6000M and an A2500 GPC column (or similar)
- Guard-column: Guard column for columns A2000 to A6000 (or similar)
- Column Temp: 40°C
- Autosampler Temperature: 20°C
- Detector Temperature: 40°C
- Mobile phase: 0.1 M NaNOs
- Flow rate: 0.8 mL/min
- Detector: RI/RALS-LALS
- Cycle time: 55 minutes

The data analysis is made on the OMNISEC software
Accordingly, the composition of the different batches obtained and analyzed in figures 14 - 16. The obtained results are summarized in table 7 and 8 below:
The obtained results are summarized in table 7 below:

| | mean±standard error | Batch 1 | Batch 2 | Batch 3 |
|---|---|---|---|---|
| Validation batch size | | 5.4032 g | 5.0568 g | 4.9721 g |
| Yield (w/w) | 124%±15% | 108% | 127% | 137% |
| dsCM (titration) | 0.44±0,02 | 0.44 | 0.40 | 0.44 |
| dsS (titration) | 1.13±0.01 | 1.13 | 1.13 | 1.12 |
| dsAc (RMN) | 0.09 | 0.09 | 0.09 | 0.09 |
| Water content | | | | |
| IR | | N.A. | N.A. | N.A. |
| RMN | Chemical shifts | 2.16 ppm (s) | 2.13 ppm (s) | 2.13 ppm (s) |

(continued)

| | mean±standard error | Batch 1 | Batch 2 | Batch 3 |
|---|---|---|---|---|
| Molecular weight distribution | Mn | 116235 | 151140 | 130020 |
| | Mean Mw | 138468 | 178495 | 175856 |
| | Mw (10%) | 76446 | 103475 | 80257 |
| | Mw (90%) | 225787 | 286488 | 319092 |

Accordingly, the composition of the different batches obtained and analyzed in figures 14-16

Table 8: Composition Data of different Batches of DAC prepared with an example of the method of the invention

| Entry | Product batch | Rate "x" of substitution of the X group (cv%) | Rate "y" of substitution of the Y group (cv%) | Rate "z" of substitution of the Z group (cv%) | Mw (cv%) | Mn (cv%) |
|---|---|---|---|---|---|---|
| 1 | CMD | 44 % | - | - | - | - |
| 2 | DAC-1 | 44 % (0 %) | 113 % (3%) | 9 % (0 %) | 138468 (15.7) | 116235 (12.3) |
| 3 | DAC-2 | 44 % (0 %) | 113 % (3%) | 9 % (0 %) | 178495 (8.7) | 151140 (14.1) |
| 4 | DAC-3 | 44 % (0 %) | 112 % (6%) | 9 % (0 %) | 175856 (7.1) | 130020 (1.8) |
| | Mean | 44 | 113 | 9 % | 175856 | 130020 |

In the table, "(cv%)" means the number in parenthesis is the coefficient of variation. Each product was analysed 3 times as shown in example 1. In the table Mw corresponds to the average molecular weight in Daltons (Da). In the table Mn corresponds to the number-average molecular weight in Daltons (Da). In the table Rate "x" of substitution corresponds to the value of dsCM multiplied by 100. In the table Rate "y" of substitution corresponds to the value of dsS multiplied by 100. In the table Rate "z" of substitution corresponds to the value of dsAc multiplied by 100.

In the table CMD means Carboxymethyl dextran, DAC-1 means batch 1 of compound comprising carboxylate, sulfate and acetate groups produced by an example of the method of the invention. DAC-2 means batch 2 of compound comprising carboxylate, sulfate and acetate groups produced by the method of the invention in example 1. DAC-3 means batch 3 of compound comprising carboxylate, sulfate and acetate groups produced by the method of the invention in example 1.

X group is a carboxymethyl group
Y group is a sulfate group
Z group is an acetate group

Table 8 represents the composition data of different batches of compounds prepared with the method of the invention. It is a summary using the methods of quantification described in example 1: acid-base titration for the quantification of carboxymethylation and sulfation indexes and $^1$H NMR for the quantification of the acetylation indexes confirmed by the dosage described by McComb and McCready [5]. The results clearly demonstrate that the method of the invention allows to obtain the compound OTR4132. It shows the repeatability of the method of the invention.

As demonstrated, the method of the invention allows to produce compounds comprising sulfate and acetate groups in a more efficient and simpler way.

The results also clearly demonstrate that the method of the invention allows to produce compounds comprising sulfate and acetate groups without secondary product. The results also clearly demonstrate that the method of the invention allows to produce compounds comprising sulfate and acetate groups which are stable over the time. The results also clearly demonstrate that the method of the invention does not produce unstable anhydride or intermediate.

As demonstrated, the method of the invention allows to produce compounds substituted comprising carboxylate, sulfate and acetate groups in a more efficient and simples way. In particular, the method of the invention allows to produce compounds comprising carboxylate, sulfate and acetate groups with a high yield providing therefore a quick and effective method. The results also clearly demonstrate that the method of the invention allows to produce compounds comprising carboxylate, sulfate and acetate groups without secondary product. The results also clearly demonstrate that the method of the invention allows to produce compounds comprising carboxylate, sulfate and acetate groups which are stable over

the time. The results also clearly demonstrate that the method of the invention does not produce unstable anhydride or intermediate.

**Example 2: Study of the sulfated and acetylated compound produced by a prior art method**

In the present example, the process used in the present example is as disclosed in Petitou et al., 1991 [6]
The starting material was a carboxymethyldextran from Laboratoire Synth-Innov produced as described in Papy et al., 2005 [4]
The starting material was polymer of dextran (CAS 9004-S4-0) from Pharmacosmos.

Table 9 discloses the parameters of the carboxymethyldextran used.

| Starting material | A mono mer | Molecular weight of the A monomer | Rate "x" of substitut ion of the X group | X group | Molar weight of the X group | Molar weight of the monomer of formula (II) | Eq.(1) of reactiv e OH specie s | Eq. (1) |
|---|---|---|---|---|---|---|---|---|
| Carboxy -methyl-dextran | glucos e | 162 g/mol | 45 % | Carboxy -methyl-dextran | 58 g/mol | 188,1 g/mol | 2.55 | 1 |
| (1) Eq.=equivalents | | | | | | | | |

The determination of the equivalents for the present example 2 is explained in table 9. The molar weight of the starting material (carboxymethyldextran) was calculated according to equation (III) as mentioned in example 1 above wherein the monomer A is glucose linked with an $\alpha$1,6-O-glycosidic bound, the molecular weight Mw(A) is 162 g/mol, the group X is carboxymethyl ether group of formula -$CH_2COOH$. Its molecular weight Mw(X) is 58 g/mol.
The rate of substitution x of the carboxymethyl group X is 45%.
The molar weight of the monomer of formula (I) for example 1 was calculated as follows:

$$\mathrm{MW} = Mw(A) + Mw(X) \times x = 162 + 58 \times 0.45 = 188.1\ g/mol$$

This molar weight of monomer of formula (I) was used to calculate the molar concentration of the starting material.
In the present example 2, the starting material was added at 10 g in 750 mL of a mix of formamide, N,N-dimethylformamide and 2-methyl-2-buten. The molar quantity of starting material carboxymethyl dextran was 1000*10/187.52 = 53.2 mmol. This quantity was defined as 1 equivalent in the present example 2.
In this example, the quantity of free hydroxyl per monomer is 2.55. These are the reactive functions of the polymers.

**Material and method**

30 g of carboxymethyldextran were dissolved in 360 mL of formamide and 1500 mL of DMF was added and 360 mL of 2-methyl-2 buten was added. The solution was heated to 30°C and 120 g of the complex SOs-DMF was added to the solution. The solution was allowed to stir for 1h at 30°C. Then 105 mL of acetic anhydride was added, and the solution was allowed to stir for another 1h at 30°C. The reaction was stopped by adding NaHCOs 1 M until the pH is comprised between 6 and 7 (in 15 min). The obtained solution was then filtrated with a diafiltration technique against MilliQ water until the filtrate has resistivity superior to 200 kΩ and with a minimum volume of MilliQ water of 40 L. The ultrafiltration cassette used was a from Millipore with commercial reference Pellicon 2 regenerated cellulose P2C010C05. The product obtained was then concentrated. The influx of renewed MilliQ of the diafiltratration was stopped until the volume was equal or inferior to 100 mL. The resistivity measured with a "resistivimeter type CD 60", Tacussel of the concentrated product was over 150 kΩ. The concentrated product was then recovered and transferred in an adapted container for freeze-drying at -20°C over-night or 2h at -80°C. When the obtained product was freeze-drying, the parameters were temperature: -15°C, cold trap temperature: -80°C and pressure: 36 μbar.
The obtained compound according to the known process should be as illustrated in Figure 3 which correspond to a schematic representation of compound OTR4132. The production composition is product composition: A<1%, B=22%, C=0%, and D=77%.
The obtained product (powder) has been analyzed to determine its composition and if it effectively comprises compound OTR4132 and the quantity of OTR4132 obtained.

Analysis of the product was carried out at different time 0 month (just after the synthesis), 3 months, 6 months, 24 months after synthesis by size exclusion chromatography HPLC (SEC-HPLC). The product was dissolved in a solution of NaCl 0.9% at the concentration of 1 mg/mL and was injected on a waters e2695 equipped with a UV detector. Module e1489 (Waters). The column was a SEC Shodex 804 column (Shodex), eluant NaCl 50 mM $CuSO_4$ 100 mM, 0,8 mL/min The obtained product has been dissolved in aqueous saline solution (0.9%) at 200 μg/mL and stored at 25°C and 60% RH. Figure 2 represents the chromatographic spectra of the product: dextran polymers comprising carboxymethyl ether, sulfate and acetate group obtained at t = 0 month (Figure 2 A, Figure 4a.), at: t = 3 months (Figure 2b.), at t = 6 months (Figure 2c. ), and at t = 24 months (Figure 2 d, Figure 4b).

As demonstrated in figure 2, the curve of the chromatographic spectra shows a shoulder which disappears with time between 0 and 24 months. As demonstrated in figure 2a., the shoulder present in the product obtained at the end of synthesis, represents up to 20% of the product surface: shoulder A at 7.8 min; majority peak B at 9.6 min. As shown in figure 2d., shoulder A at 7.8 min diminishes until it disappears after 24 months after storage in physiological solution of NaCl 0,9% at 200 μg/mL. In other words, the obtained product comprise at least two compounds illustrated by shoulders A and B mentioned in the spectra. In addition, since one of the spectra disappears with time, it means that the obtained product is not stable overt the time.

Accordingly, the obtained results demonstrate that the prior art method does not allow to obtain stable compounds over the time. In addition, the product obtained by the prior art method comprises secondary products which clearly reduce the yield of production and further implies purification steps. A characterization of the sulfate and carboxymethyl indexes was carried out by acido-basic titration of the obtained product/compound. Briefly, between 5 and 15 mg of the product were weighted on a precision scale and the exact weight noted (test portion). This quantity was dissolved in 1.2 mL of UHQ (MilliQ, Millipore) water and the obtained solution was passed on previously prepared Amberlite IR-120 resin column (Sigma-Aldrich) of about 10 g. 2 times 1 mL of UHQ water were used to rinse the Amberlite IR-120 (Sigma-Aldrich) and recover the full quantity of the product. The obtained acidified solution was then titrated on a Metrhom Titrino 848 (VWR) with a titrating solution of NaOH 0,94 M with the following parameters:

Table 10: titration conditions

| Starting conditions | |
|---|---|
| Impulsion activation | off |
| Starting pause | 240 s |
| Starting volume | 0.00000 mL |
| flowrate | 0.9 mL/min |
| Pause | 0s |
| Ask for sample ID | off |
| Ask for sample weight | off |
| Ask for sample weight unit | off |
| Pause on demand | on |
| Titration parameters | |
| Titration speed | Utilisat. |
| Volume increments | 0.00005 mL |
| Titration flowrate | 0.1 mL/min |
| Signal drift | 50.0 mV/min |
| Min. waiting time | 1s |
| Max. waiting time | 26s |
| temperature | 23.2 °C |
| Sensor | pH electrode |
| Solution | undefined |
| Stirring speed | 6 |

(continued)

| | |
|---|---|
| Stopping conditions | |
| Stopping volume | 2 mL |
| Stopping pH val. | 11 |
| Stopping EP | 9 |
| Volume after EP | off |
| Stopping time | off |
| Filling flowrate | Max. mL/min |
| Reports | |
| Results | off |
| Curve | off |
| Calculations/statistics | off |
| List of measurement points | off |
| Parameters | off |
| PC/LIMS | on |

The equivalence volumes are found at pH 4.0 for the sulfate groups and at pH 7.0 for the carboxymethyl groups. The sulfate indexes are obtained through the following calculus:

$$ds_S = Qs_S \times 0{,}001 \times MW_{glc}$$

With :

dss = sulfate index (sulphate per glucose unit)
Qss = quantity of substance of sulphate per mg of polymers (mmol/mg)
$MW_{glc}$ = molecular weight of the glucose unit (mg/mmol) (here 231,35)

The carboxymethylation level of a polymer is calculated with the following formula:

$$ds_{CM} = Qs_{CM} \times 0{,}001 \times MW_{glc}$$

With :

$ds_{CM}$ = carboxymethylation level (carboxymethyl per glucose unit)
$Qs_{CM}$ = quantity of substance of carboxymethyl per mg of polymers (mmol/mg)
$MW_{glc}$ = molecular weight of the glucose unit (mg/mmol) (here 231,35)

And with:

$$Qs_S = \frac{C_{NaOH} \times Veq_1}{P_E}$$

With :

Qss = quantity of substance of sulphate per mg of polymers (mmol/mg)
$C_{NaOH}$ = concentration of titrating NaOH solution (M)
$V_{eq1}$ = first volume at the equivalence (mL)
$P_E$ = test portion of the compound titrated (mg)

And

$$Qs_{CM} = \frac{C_{NaOH} \times Veq_2}{P_E}$$

With :

$Qs_{CM}$ = quantity of substance of carboxymethyl per mg of polymers (mmol/mg)
$C_{NaOH}$ = concentration of titrating NaOH solution (M)
$V_{eq2}$ = first volume at the equivalence (mL)
$P_E$ = test portion of the compound of the polymers titrated (mg)

The obtained results after synthesis and 24 months after synthesis are summarized in table 11 below.

Table 11: sulfate and carboxymethyl indexes

| | After synthesis | 24 months after synthesis |
|---|---|---|
| Sulfate index | 1,45 | 1,18 |
| Carboxymethyl index | 0,45 | 0,39 |

As mentioned in the above table 11, the sulfate index decreases from 1.45 to 1.18 sulfates per glycoside unit and carboxylic acid from 0.45 to 0.39 carboxymethyls per glycoside unit. This demonstrate that the obtained product/compound comprises at least unstable groups and thus that the prior art method does not allow to obtain stable compounds over the time. These results also suggest that the obtained product comprises mixed anhydrides such as $R-O-CH_2-COO-SO_3^-$, $R-O-CH_2COO-COCH_3$, R-O-SOs-COCHs, $R-O-CH_2-COO-SO_3-COCH_3$
A Fourier Transform InfraRed (FTIR) spectroscopy of the obtained product/compound as a solid on a IRTF Tensor 27 Platinium ATR Bruker (Bruker) after synthesis was carried out. The same batch was dissolved in aqueous NaCl 0.9%. 24 months after re-solubilization, the product was freeze-dried again with the following parameter: -15°C, cold trap temperature: -80°C and pressure: 36 μbar. The FTIR spectrum were then acquired on the IRTF Tensor 27 Platinium ATR Bruker (Bruker). Figure 5a. represent the obtained spectra after synthesis and figure 5b. 24 months after dissolution. As illustrated in figure 5b., the peak at 1740 $cm^{-1}$ disappears after 24 month and the adjacent peak at 1590 $cm^{-1}$ increase. The peak at 1740 $cm^{-1}$ corresponds to a C=O elongation due to the present of a mixed anhydride in the solution, whereas the band at 1590 $cm^{-1}$ corresponds to a C=O elongation of carboxylic acid group. These results support that the obtained product comprise mixed anhydrides such as $R-O-CH_2-COO-SO_3^-$, $R-O-CH_2COO-COCH_3$, $R-O-SO_3-COCH_3$, $R-O-CH_2-COO-SO_3-COCH_3$
An $^1H$ RMN 400Mhz analysis of the obtained product after resuspension in aqueous $D_2O$ in a concentration of 40 mg/mL was carried out on a Bruker Avance II 400 (Bruker) using residual $H_2O$ peak as a standard (4.7900 ppm). The peaks of anomeric protons (from 5.0 to 5.5 ppm) were used as internal standard of integration (integration of the signal=1.0) The quantification of the acetate group was done by integrating the signal from 2.05 to 2.25 ppm corresponding to the $CH_3$ of the acetate group. This integration is then divided by 3 to obtain the quantity of acetate per glucose unit. Figure 6a represents the obtained spectrum. As demonstrated, in figures 6, a peak, labelled A shows a shoulder (d) slightly more unshielded (2.23 ppm) than the main peak (c) (2.13 ppm). After 24 months (figure 6b) in aqueous solution, the shoulder disappeared, and two less unshielded peaks appeared ((b) 2.0 ppm and (a) 1.90 ppm). The least unshielded singlet (a) was identified (figure 7a.), corresponding to free acetates (figure 7b). The more deshielded shoulder (d) come from mixed anhydrides by analogy with acetic anhydride (2.23 ppm) (figure 7d). The singlet at 2.0 ppm derived from a hydro-labile function/group, since after 24 months in aqueous solution, its integration decreases to the free acetate singlet (1.90 ppm). This singlet comes from acetyl sulfates (figure 7b: acetyl sulfate produced by mixing acetic anhydride and sulfuric acid 1.4 :1 as described by Makowski, H. S. et al [3]), which degrade to sulfates (invisible in $^1H$ NMR) and acetates (peak a). This demonstrate that the obtained product comprises at least hydro-labile group and thus that the prior art method does not allow to obtain a unique and stable compound over the time. These results also suggest that the obtained product comprise also mixed anhydrides such as $R-O-CH_2-COO-SO_3^-$, $R-O-CH_2COO-COCH_3$, R-O-SOs-COCHs, $R-O-CH_2-COO-SO_3-COCH_3$, with R-O- corresponding to the monomers, oligomers and polymers as defined above.
The obtained results clearly demonstrate that, contrary to the method of the invention, the product obtained by the known method comprises secondary product and are not stable over the time.
The results clearly demonstrate that, the known method, contrary to the method of the invention may have a poor yield of production and produce compounds which are not stable over the time.

The results also clearly demonstrate that the method of the invention allows advantageously and surprisingly the production of compounds sulfate and acetate groups, in a single pot and one sulfation-acetylation step.

**Example 3 Sulfation and acetylation of a compound having one or more hydroxyl group and variation of the quantity of SO3-DMF and CH2(CO)O(CO)CH2**

In the present example, the compound having one or more hydroxyl group used as starting material was carboxymethyldextran (CMD) obtained from Laboratoire Synth-Innov and produced according to Papy et al. 2005 [4] as in example 1 above. The molecular weight of the carboxymethyldextran (CMD) used was determiner as mentioned in example 1 above and was 187,52 g/mol. It was sulfated and acetylated using the method disclosed in example 1 while varying the quantity of SOs-DMF and the quantity of acetic anhydride ($CH_2(CO)O(CO)CH_2$) as described in Tables 9. Table 9 represents the comparative structural data for different polysaccharides synthesized by different reaction conditions.

The carboxymethylation and sulfation indexes were measured by acid-base titration as described in example 1, in particular, the carboxymethylation indexes and sulfate indexes were obtained by 4 measurements of titration as described in example 1

The acetylation indexes were measured by $^1$H NMR and confirmed by the colorimetric dosage of McComb and McCready as described in example 1.

In the present example 3, the starting material was added at 10 g in 750 mL of a mix of formamide, N,N-dimethylformamide and 2-methyl-2-buten. The molar quantity of starting material carboxymethyl dextran is 1000*10/187.52 = 53.3 mmol. This quantity was defined as 1 equivalent in the present example 3.

In the table 12 below, the equivalents correspond to the quantity of matter of the concerned product, for example acetic anhydride divided by the quantity of monomer of formula (II) unit of the starting material comprising at least one free hydroxyl group, i.e. carboxymethyldextran as described in table 1. For each measure, the coefficient of variation was inferior to 9%.

The corresponding compound obtained are mentioned in Table 12

Table 12: conditions sulfation and acetylation

| Entry | $SO_3$-DMF | Sulfation reaction conditions | Acetic anhydride | Acetylati on reaction conditio ns | Rate "x" of substitutio n of the X group[a,b] | Rate "y" of substitution of the Y group[a] | Rate "z" of substitutio n of the Z group[a] |
|---|---|---|---|---|---|---|---|
| 1 | $SO_3$-DMF | 5 equiv/30° C | Acetic anhydride | 7.5 equiv/30 °C | 44 % | 109 % | 2 % |
| 2 | $SO_3$-DMF | 5 equiv/30° C | Acetic anhydride | 11 equiv/30 °C | 41 % | 111 % | 5 % |
| 3 | $SO_3$-DMF | 5 equiv/30° C | Acetic anhydride | 20 equiv/30 °C | 44 % | 112 % | 9 % |
| 4 | $SO_3$-DMF | 5 equiv/30° C | Acetic anhydride | 40 equiv/30 °C | 43 % | 111 % | 9 % |
| 5 | $SO_3$-DMF | 5 equiv/30° C | Acetic anhydride | 20 equiv/22 °C | 43 % | 116 % | 4 % |
| 6 | $SO_3$-DMF | 4.2 equiv/30° C | Acetic anhydride | 20 equiv/30 °C | 44 % | 099 % | 8 % |

(continued)

| Entry | $SO_3$-DMF | Sulfation reaction conditions | Acetic anhydride | Acetylati on reaction conditio ns | Rate "x" of substitutio n of the X group[a,b] | Rate "y" of substitution of the Y group[a] | Rate "z" of substitutio n of the Z group[a] |
|---|---|---|---|---|---|---|---|
| 7 | $SO_3$-DMF | 6.4 equiv/30° C | Acetic anhydride | 20 equiv/30 °C | 43 % | 116 % | 8 % |

"[a]" means each sample was analysed at least 4 times with a coefficient of variation inferior to 9% for any of the performed analysis. "[b]" means: Starting material: CMD (ds = 0.44).
X group is a carboxymethyl, Y group is a sulfate group and Z group is an acetate group. In table 12, Rate "x" of substitution corresponds to the value of dsCM multiplied by 100, Rate "y" of substitution corresponds to the value of dsS multiplied by 100 and Rate "z" of substitution corresponds to the value of dsAc multiplied by 100.

As demonstrated increasing the quantity of acetic anhydride allows to increase the acetylation index to a maximum of 0.09.

As demonstrated, when reducing the quantity of acetic anhydride from 20 equivalents to 11 equivalents and 7.5 equivalents, the acetylation index decreases to 0.05 and 0.02. Increasing it from 20 equivalents to 40 equivalents did not increase the acetylation index. Decreasing the quantity of acetylation agent from 5 equivalent to 4.2 equivalents decreased the sulfation index from 1.11 to 0.99. Increasing the quantity of SOs-DMF to 6.4 equivalents increases the level of sulfation to 1.16.

Figure 18 represents a spectrum of $^1H$ 400 MHz NMR of dextran polymers comprising carboxymethyl ether, sulfate and acetate groups obtained by the method of the invention with the conditions of entry 1 of table 12: 5 equivalents of SOs-DMF, 30°C and 7.5 equivalents of acetic anhydride, 30°C. $^1H$ 400 MHz NMR spectrum of stable DAC product obtained by an example of the method of the invention with a lower quantity of acetylation agent (7.5 equiv.), suspended in $D_2O$ at the end of synthesis (8 mg/mL). Peaks "A" from 1.5 to 2.5 ppm correspond to acetate and acetyl groups. As the products are statistical polymers, the NMR peaks are not sharp. The peaks that are sharp are small molecules typically side-products. Peaks "B" from 3.50 ppm to 4.70 ppm correspond to CH hydrogens of carbons C2, C3 and C4 of the pyranose rings, as well as the $CH_2$ hydrogens of the C6 carbon. Peaks "C" corresponds to CH hydrogens of carbons C1 of the pyranose rings. Ordinate represents the intensity of the $^1H$ NMR signals (AU), abscissa represents the chemical shift of $^1H$ NMR signals (ppm). The peak "b" (s, 2.00 ppm) corresponds to the $CH_3$ of acetylsulfates. The peak "c" (s, 2.13 ppm) corresponds to the $CH_3$ of acetyl moieties. It is possible to integrate the signals of peaks A (CH hydrogens of the C1 position) as 1.00. The relative integration of the peak "c" of the acetate groups divided by 3 gives the acetylation index (mean number of acetate group per glucose unit), here 0.02. The absence of a peak "d" at 2.23 ppm shows the absence of unstable mixed anhydrides. Peak "e" at 5.16 ppm corresponds to the CH hydrogen of the C1 position of the glucose units bearing a carboxymethyl group at its C2 position. Peak "f" at 5.34 ppm corresponds to the CH hydrogen of the C1 position of the glucose units bearing a sulfate group at its C2 position. The acetyl index is lower (0.023) and dependent of the quantity of acetylation agent used.

Figure 19 represents a spectrum of $^1H$ 400 MHz NMR of dextran polymers comprising carboxymethyl ether, sulfate and acetate groups obtained by the method of the invention with the conditions of entry 2 of table 12: 5 equivalents of SOs-DMF, 30°C and 11 equivalents of acetic anhydride, 30°C. As the products are statistical polymers, the NMR peaks are not sharp. The peaks that are sharp are small molecules typically side-products. Peaks "A" from 1.5 to 2.5 ppm correspond to acetate and acetyl groups. Peaks "B" from 3.50 ppm to 4.70 ppm correspond to CH hydrogens of carbons C2, C3 and C4 of the pyranose rings, as well as the $CH_2$ hydrogens of the C6 carbon. Peaks "C" corresponds to CH hydrogens of carbons C1 of the pyranose rings. Ordinate represents the intensity of the $^1H$ NMR signals (AU), abscissa represents the chemical shift of $^1H$ NMR signals (ppm). The peak "b" (s, 2.00 ppm) corresponds to the $CH_3$ of acetylsulfates. The peak "c" (s, 2.13 ppm) corresponds to the CH3 of acetyl moieties. It is possible to integrate the signals of peaks A (CH hydrogens of the C1 position) as 1.00. The relative integration of the peak "c" of the acetate groups divided by 3 gives the acetylation index (mean number of acetate group per glucose unit), here 0.05. The absence of a peak "d" at 2.23 ppm shows the absence of unstable mixed anhydrides. Peak "e" at 5.16 ppm corresponds to the CH hydrogen of the C1 position of the glucose units bearing a carboxymethyl group at its C2 position. Peak "f" at 5.34 ppm corresponds to the CH hydrogen of the C1 position of the glucose units bearing a sulfate group at its C2 position. The acetyl index is lower (0.053) and dependent of the quantity of acetylation agent used.

These spectra clearly show that decreasing the equivalents of acetic anhydride allows to reduce the quantity of acetate (peak at 2.0 ppm) of the obtained compounds.

This example clearly demonstrates that the method of the invention allows to obtain compounds with different sulfation and acetylation indexes, for example by modulation the quantity or concentration of SOs-DMF and/or $CH_2$(CO)

$O(CO)CH_2$ added.

## List of references

1. LUO, Pengfeng, NIE, Ming, WEN, Huigao, et al. Preparation and characterization of carboxymethyl chitosan sulfate/oxidized konjac glucomannan hydrogels. International journal of biological macromolecules, 2018, vol. 113, p. 1024-1031.
2. MUZZARELLI, Riccardo AA, TANFANI, Fabio, EMANUELLI, Monica, et al. Sulfated N-(carboxymethyl) chitosans: novel blood anticoagulants. Carbohydrate research, 1984, vol. 126, no 2, p. 225-231.
3. US 3,870,841
4. PAPY-GARCIA, Dulce, BARBIER-CHASSEFIÈRE, Véronique, ROUET, Vincent, et al. Nondegradative sulfation of polysaccharides. Synthesis and structure characterization of biologically active heparan sulfate mimetics. Macromolecules, 2005, vol. 38, no 11, p. 4647-4654.
5. MCCOMB, Elizabeth A. et MCCREADY, R. M. Determination of acetyl in pectin and in acetylated carbohydrate polymers. Analytical Chemistry, 1957, vol. 29, no 5, p. 819-821
6. PETITOU, Maurice, COUDERT, Catherine, LEVEL, Michel, et al. Selectively O-acylated glycosaminoglycan derivatives. Carbohydrate research, 1992, vol. 236, p. 107-119.


## Claims

**1.** A method for sulfation and acetylation of a compound having one or more hydroxyl group, wherein the method comprises, in a single reaction batch, the reaction of said compound with Sulphur trioxide/N,N-dimethylformamide (SOs-DMF) and $CH_2(CO)O(CO)CH_2$ in presence of a hydrolyzing reagent, preferably an acid or a base, and more preferably a weak base.

**2.** The method according to claim 1, wherein the hydrolyzing reagent is of formula HCOsR wherein R is a hydrogen atom or a cation $M^+$, preferably $M^+$ is an alkali metal selected from the group comprising lithium, sodium, potassium, rubidium and cesium cation.

**3.** The method according to claims 1 or 2, wherein the hydrolyzing reagent is sodium bicarbonate ($HCO_3^-$ $Na^+$).

**4.** The method according to claim 3, wherein the concentration of the hydrolyzing reagent in the batch is from 0.7 to 1.2 M.

**5.** The method according to any of claims 1 to 4, wherein the method comprises the following steps:

a) preparation of a homogeneous solution of said compound having one or more hydroxyl group in an anhydrous solvent or cosolvent
b) addition of the SOs-DMF and $CH_2(CO)O(CO)CH_2$ under agitation;
c) adding a hydrolyzing reagent, preferably an acid or a base, and more preferably a weak base,
d) agitation of the mixture obtained in step c) for 1 to 24 hours, preferably 20 hours at a controlled temperature from 20 to 50°C, preferably of 40°C.

**6.** The method according to claim 5, wherein it comprises a purification step e) of the compound obtained in step (d).

**7.** The method according to any one of the preceding claims, **characterized in that** the compound having one or more hydroxyl group is selected from the group comprising the monomers, oligomers and polymers.

**8.** The method according to claim 7, wherein the compound is a polymer comprising a monomer "A" identical or different selected from sugars, esters, alcohols, amino acids, nucleotides, nucleic acids, proteins or derivatives thereof.

**9.** The method according to claim 8, wherein the identical or different A monomers are selected from sugars or derivatives thereof.

**10.** The method according to claims 8 or 9, wherein the polymer is a derivative of dextran or a copolymer of malic acids.

**11.** The method according to any of claims 1 to 10 wherein the method further comprises before the sulfation and acetylation step, a preliminary step of carboxymethylation of compound presenting one or more hydroxyl group.

**12.** The method according to any of claims 1 to 9, wherein that the compound to be sulfated and acetylated is a polymer of formula:

AaXx (I)

in which A is a monomer; X is an $R_1COOR_2$ or $-R_9(C{=}O)R_{10}$ group;
$R_1$ and $R_9$ are independently an aliphatic hydrocarbon chain, optionally branched and/or unsaturated and optionally containing one or more aromatic rings with the exception of benzylamine and benzylamine sulfonate,
$R_2$ is a hydrogen atom or an $M^+$ cation,
$R_{10}$ is independently a bond, an aliphatic hydrocarbon chain, optionally branched and/or unsaturated,
a is the number of monomers,
x is the rate or level or degree of substitution of the A monomers by X groups.

**a.**

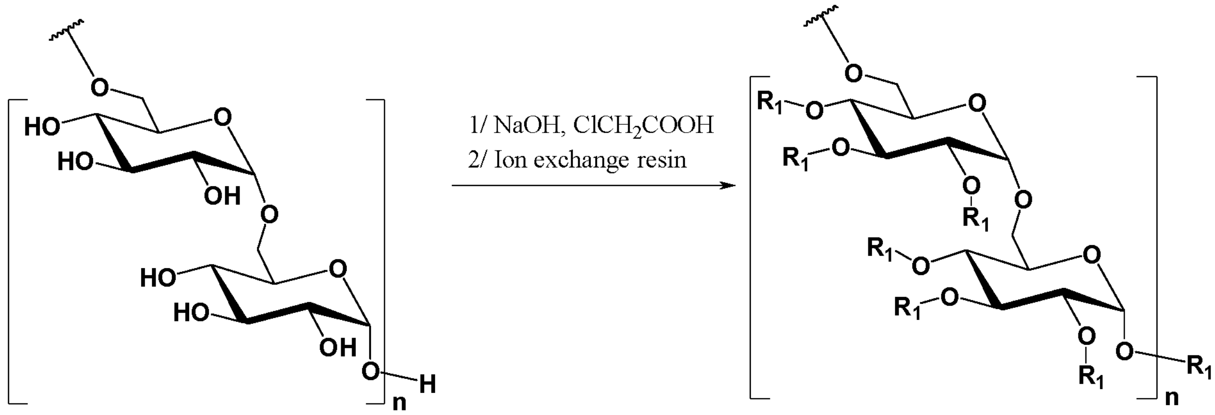


R1=-H or $-CH_2COOH$

**Dextran 40**
**CAS 9004-S4-0**

**Carboxymethyldextran CMDH+**

**b.**

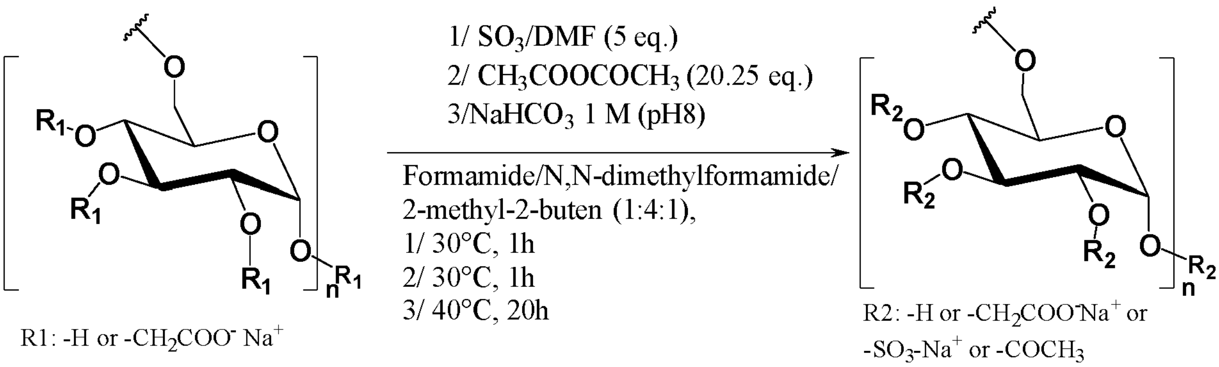


R1: -H or $-CH_2COO^- Na^+$
**Carboxymethyldextran**

R2: -H or $-CH_2COO^-Na^+$ or $-SO_3\text{-}Na^+$ or $-COCH_3$
**DAC**

# FIGURE 1

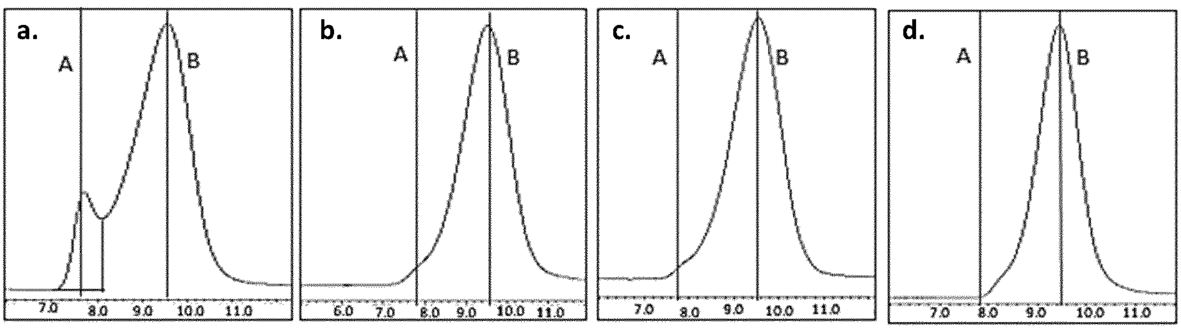


# FIGURE 2

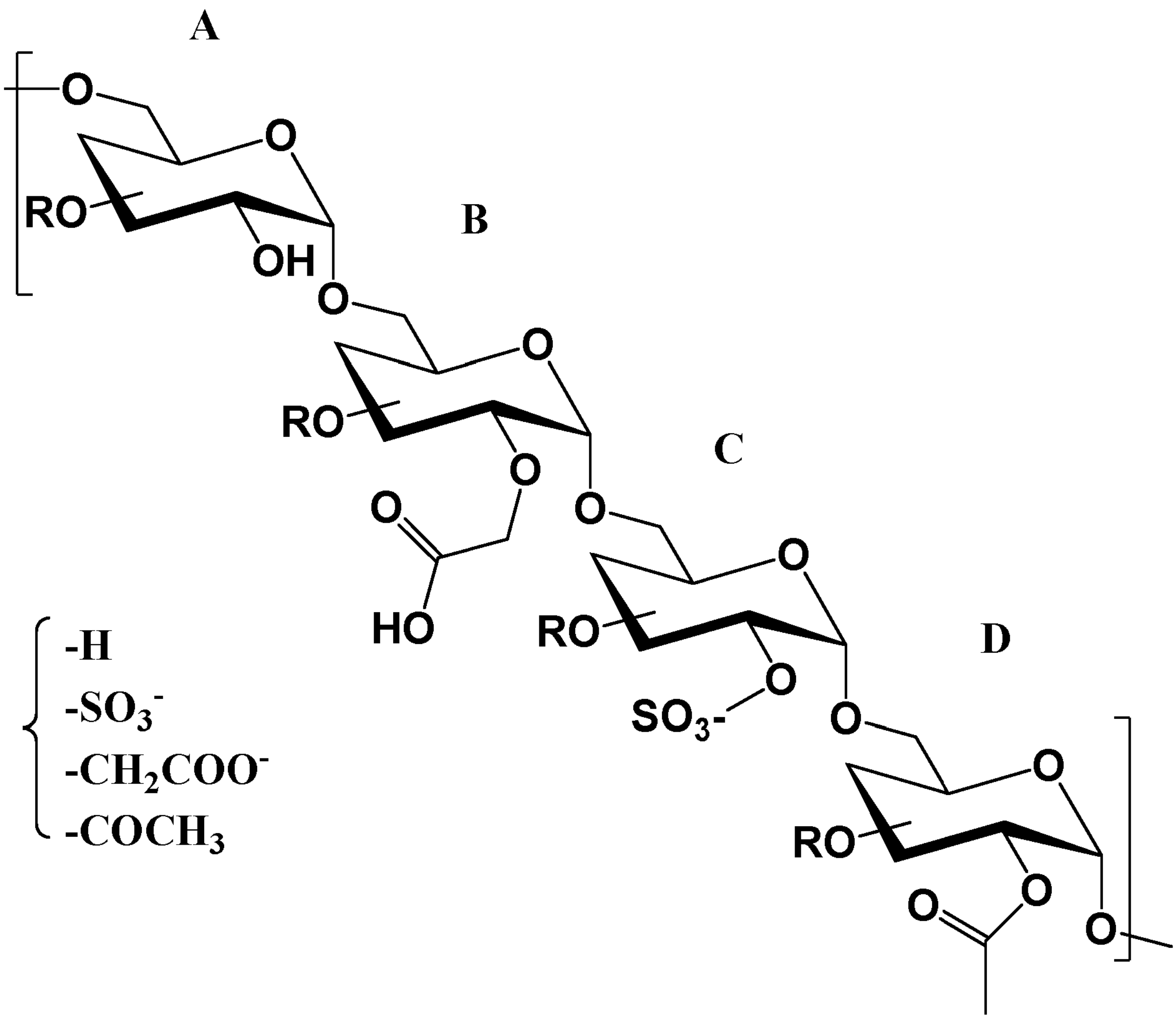

-H
$-SO_3^-$
$-CH_2COO^-$
$-COCH_3$

FIGURE 3

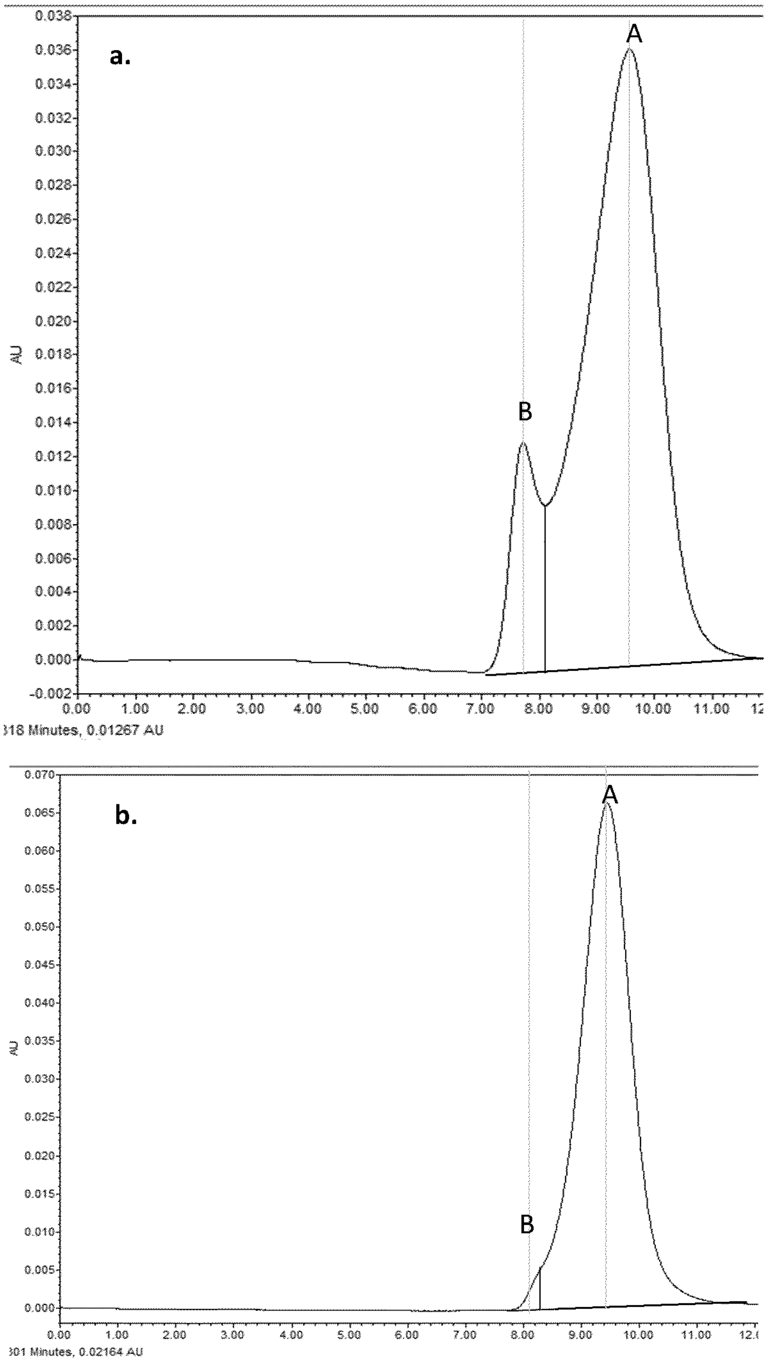
a.
A
B
AU
0.038
0.036
0.034
0.032
0.030
0.028
0.026
0.024
0.022
0.020
0.018
0.016
0.014
0.012
0.010
0.008
0.006
0.004
0.002
0.000
-0.002
0.00 1.00 2.00 3.00 4.00 5.00 6.00 7.00 8.00 9.00 10.00 11.00
Minutes, 0.01267 AU
b.
A
B
AU
0.070
0.065
0.060
0.055
0.050
0.045
0.040
0.035
0.030
0.025
0.020
0.015
0.010
0.005
0.000
0.00 1.00 2.00 3.00 4.00 5.00 6.00 7.00 8.00 9.00 10.00 11.00
Minutes, 0.02164 AU

FIGURE 4

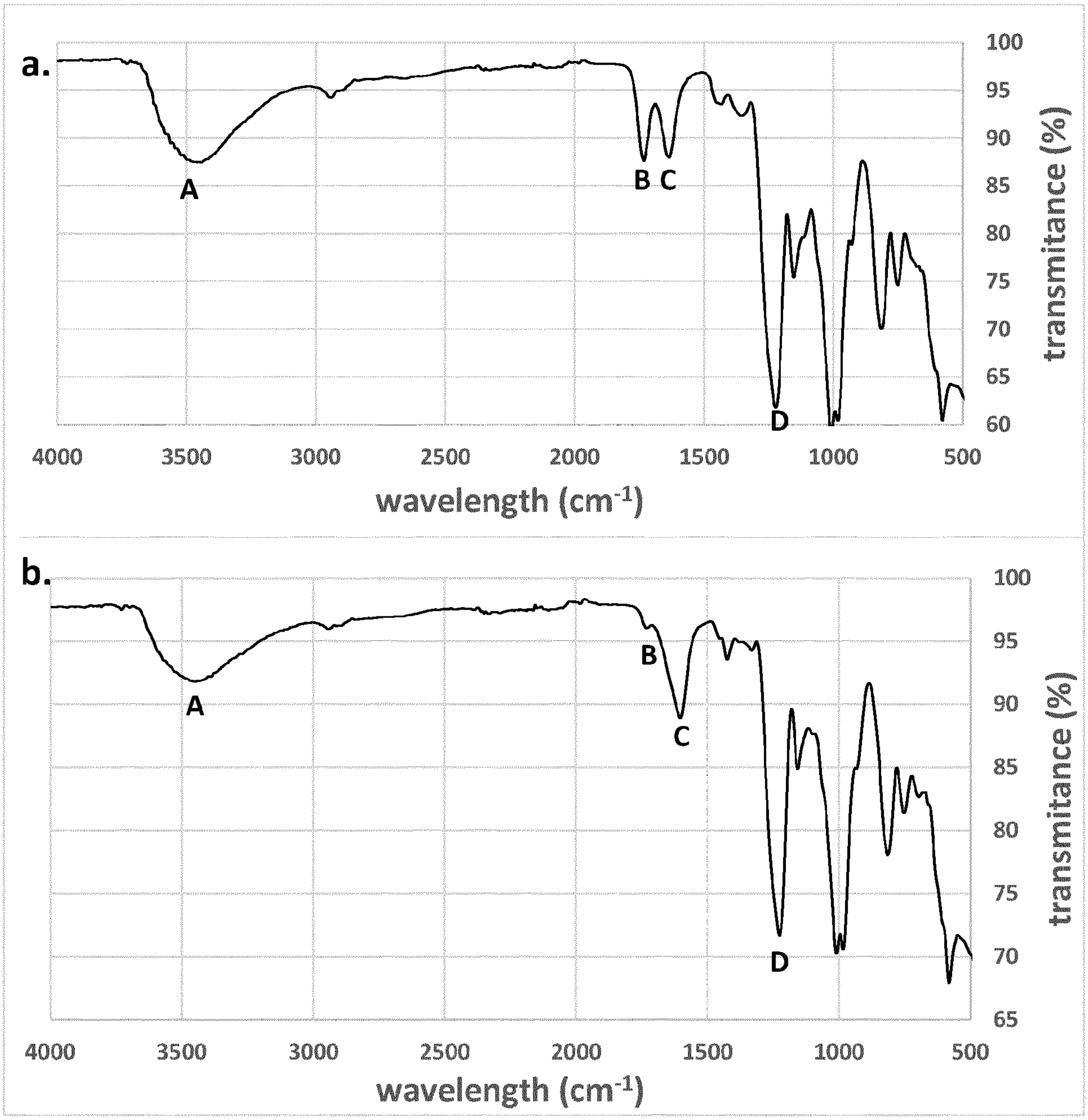
a.
A
B C
D
transmitance (%)
wavelength (cm-1)
100
95
90
85
80
75
70
65
60
4000
3500
3000
2500
2000
1500
1000
500
b.
A
B
C
D
transmitance (%)
wavelength (cm-1)
100
95
90
85
80
75
70
65
4000
3500
3000
2500
2000
1500
1000
500

FIGURE 5

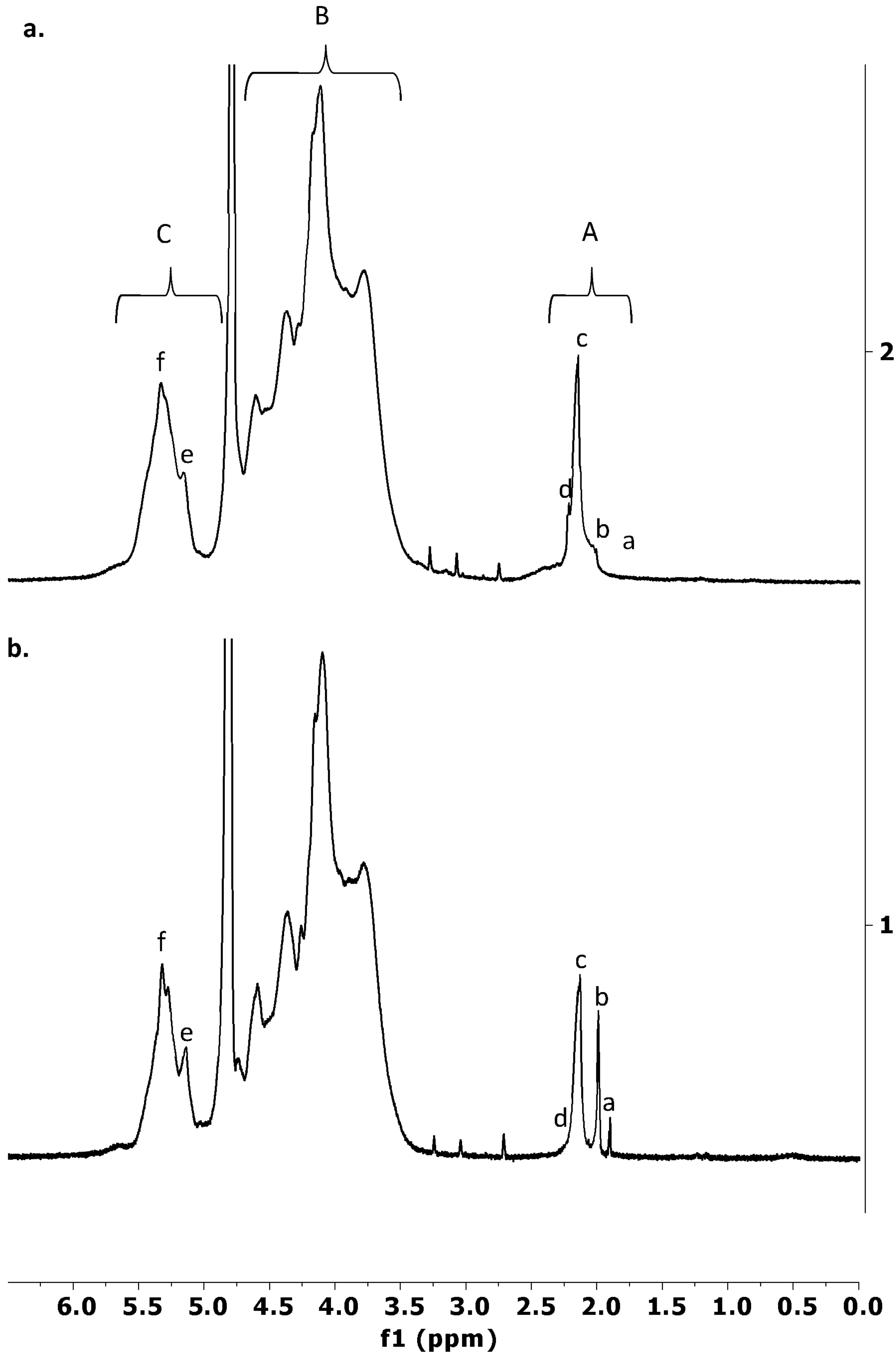
a.
B
C
A
f
e
c
d
b
a
2
b.
f
e
c
b
d
a
1
6.0
5.5
5.0
4.5
4.0
3.5
3.0
2.5
2.0
1.5
1.0
0.5
0.0
f1 (ppm)

FIGURE 6

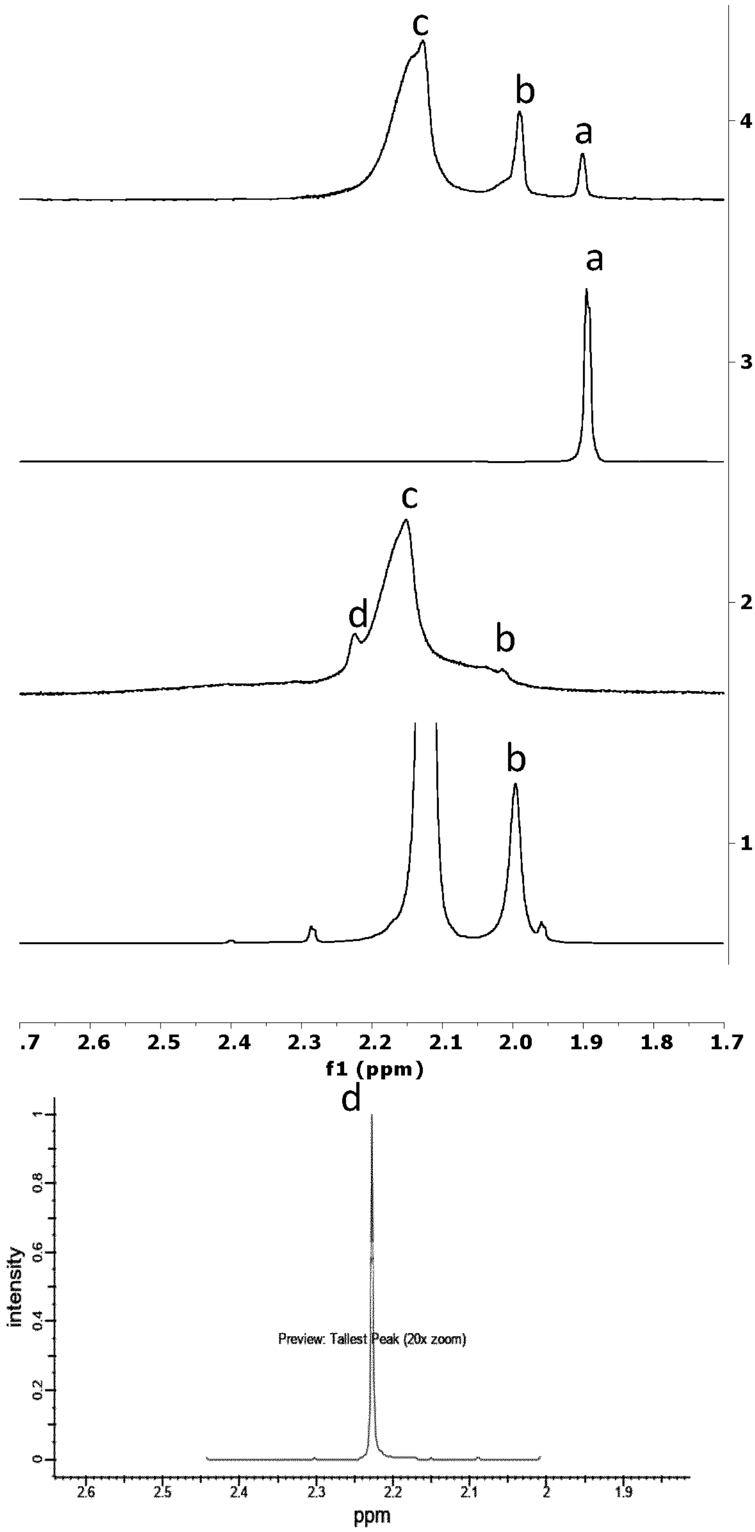
c
b
a
4
a
3
c
d
b
2
b
1
.7 2.6 2.5 2.4 2.3 2.2 2.1 2.0 1.9 1.8 1.7
f1 (ppm)
d
intensity
0 0.2 0.4 0.6 0.8 1
Preview: Tallest Peak (20x zoom)
2.6 2.5 2.4 2.3 2.2 2.1 2 1.9
ppm

FIGURE 7

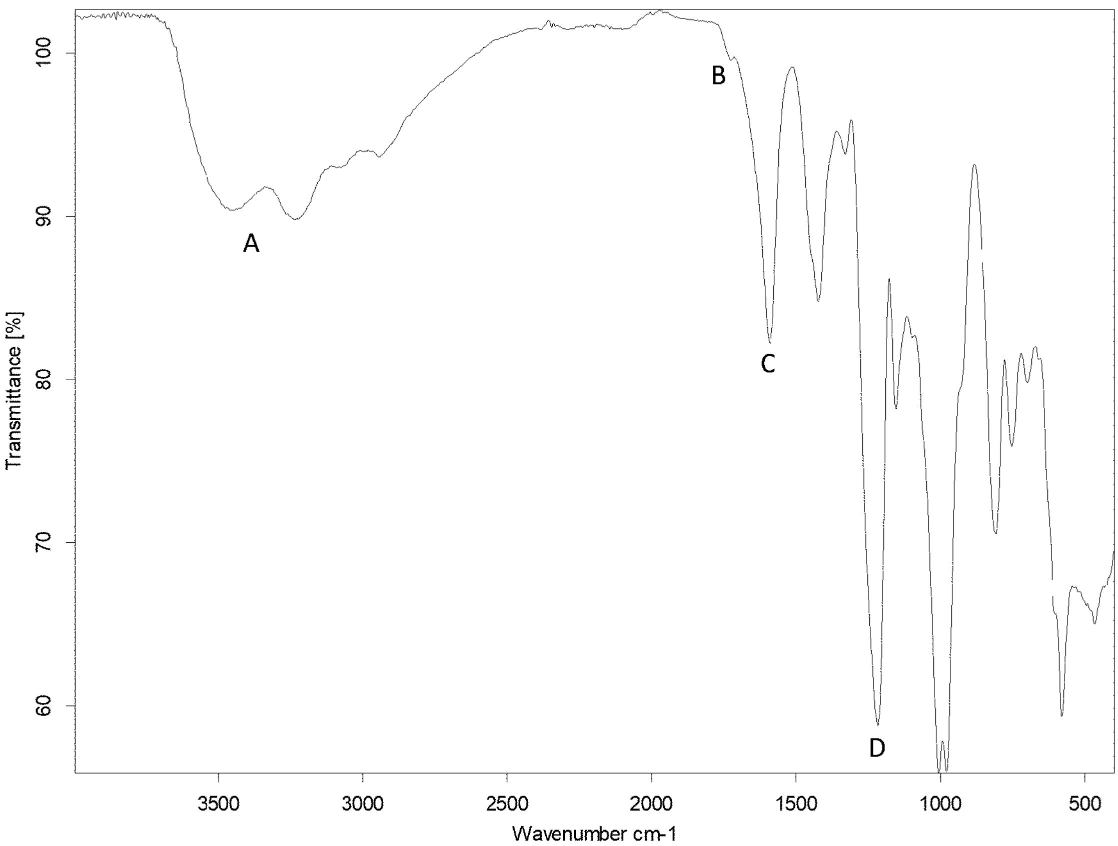


FIGURE 8

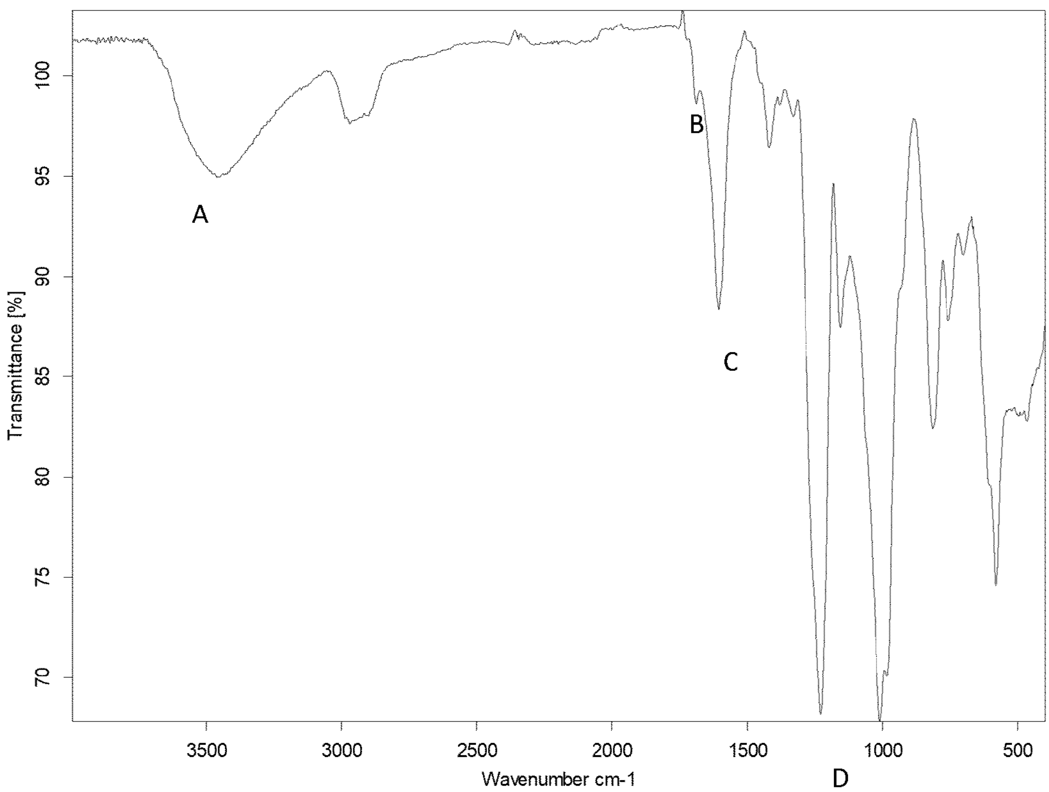


FIGURE 9

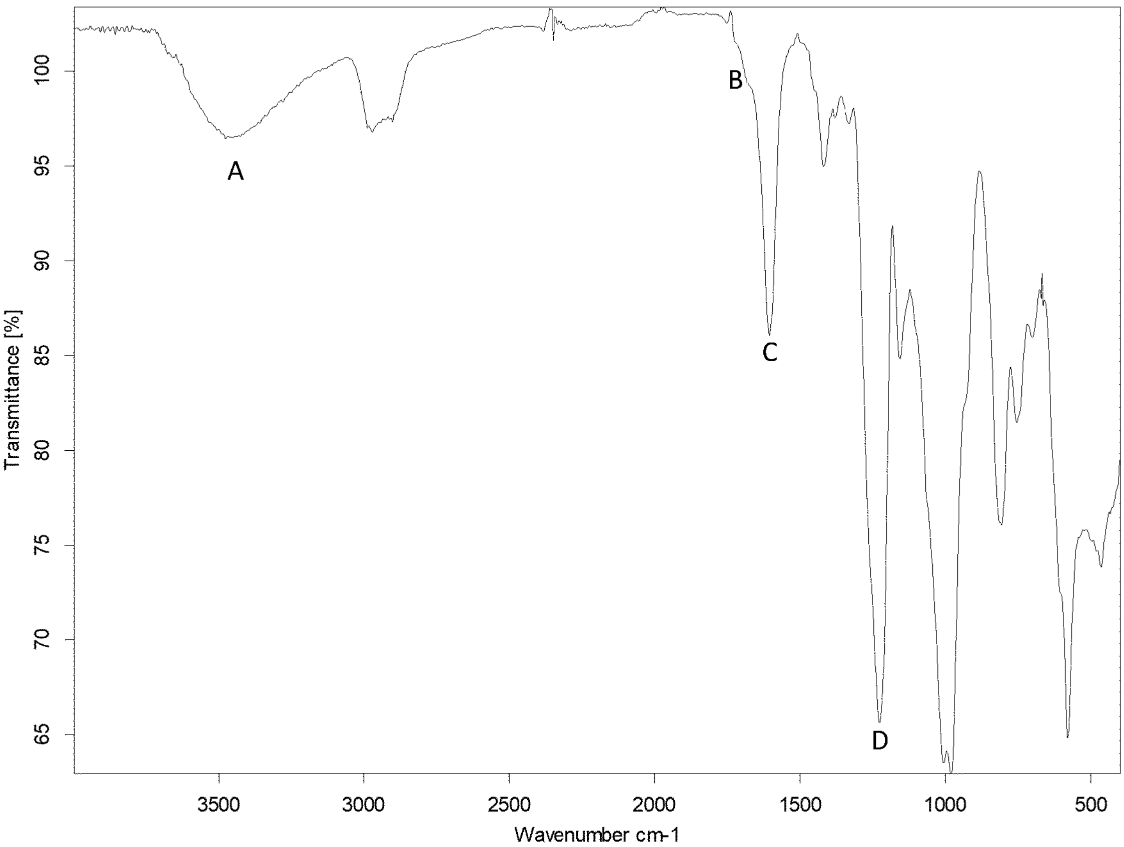
Transmittance [%]
100
95
90
85
80
75
70
65
A
B
C
D
3500
3000
2500
2000
1500
1000
500
Wavenumber cm-1

FIGURE 10

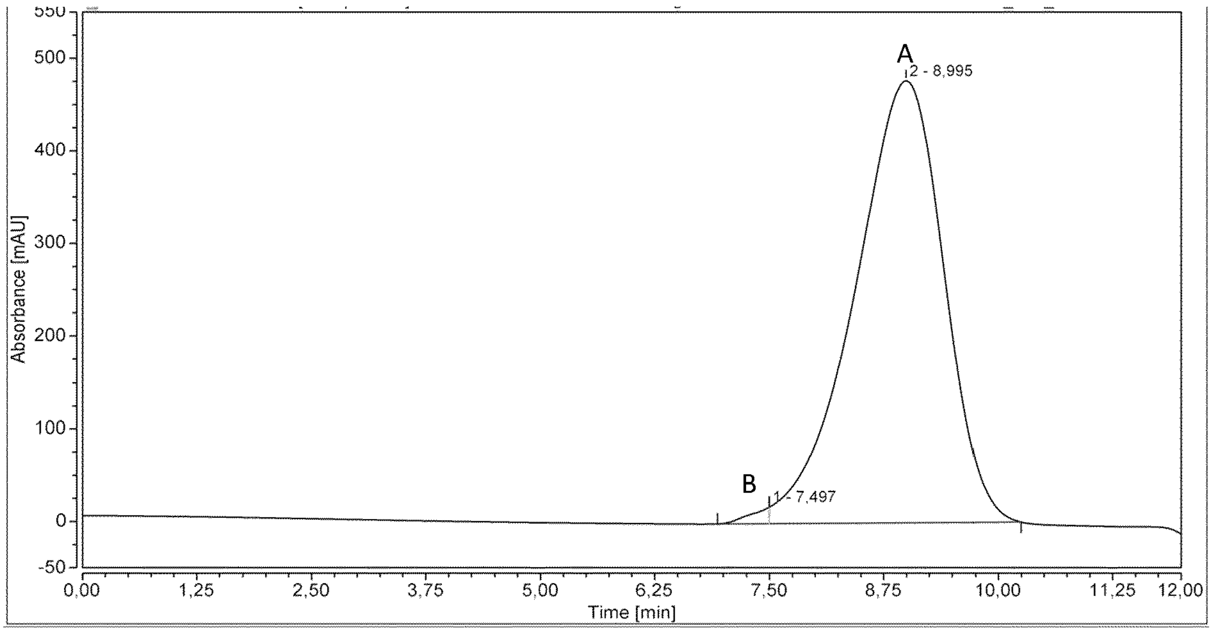


FIGURE 11

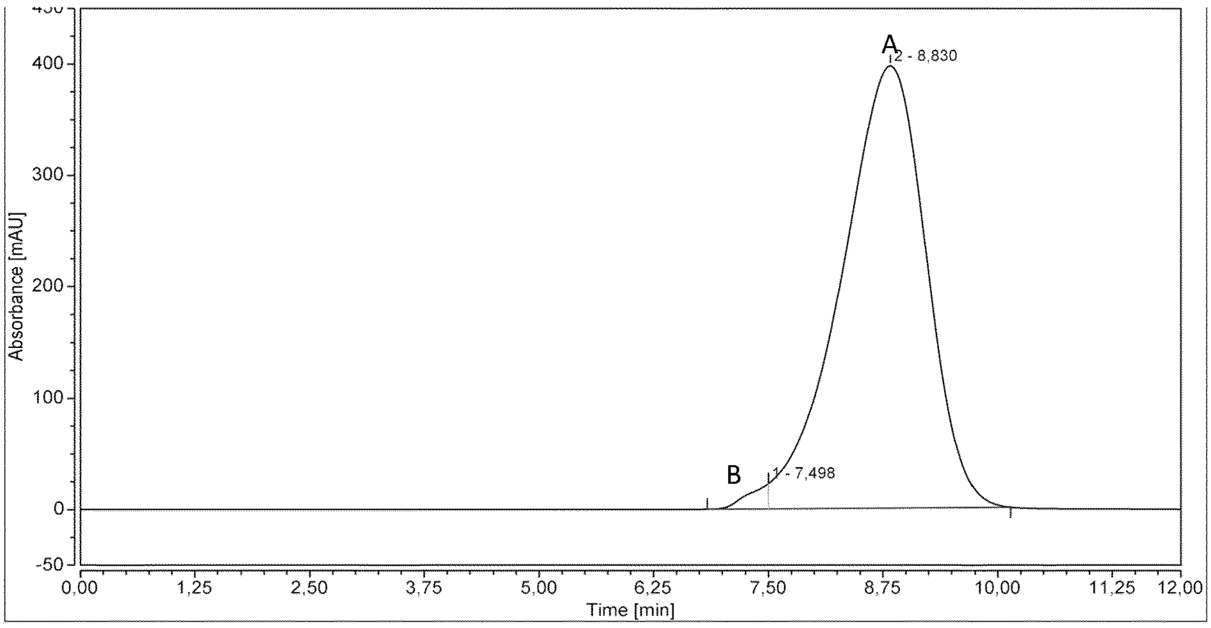


FIGURE 12

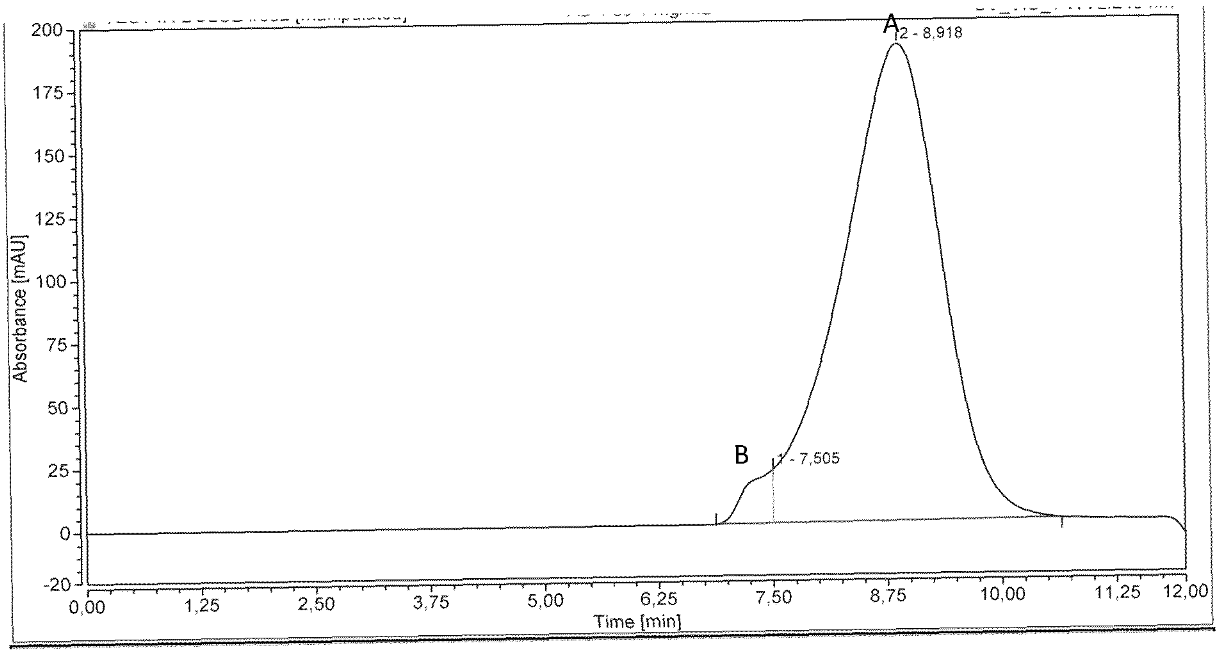


FIGURE 13

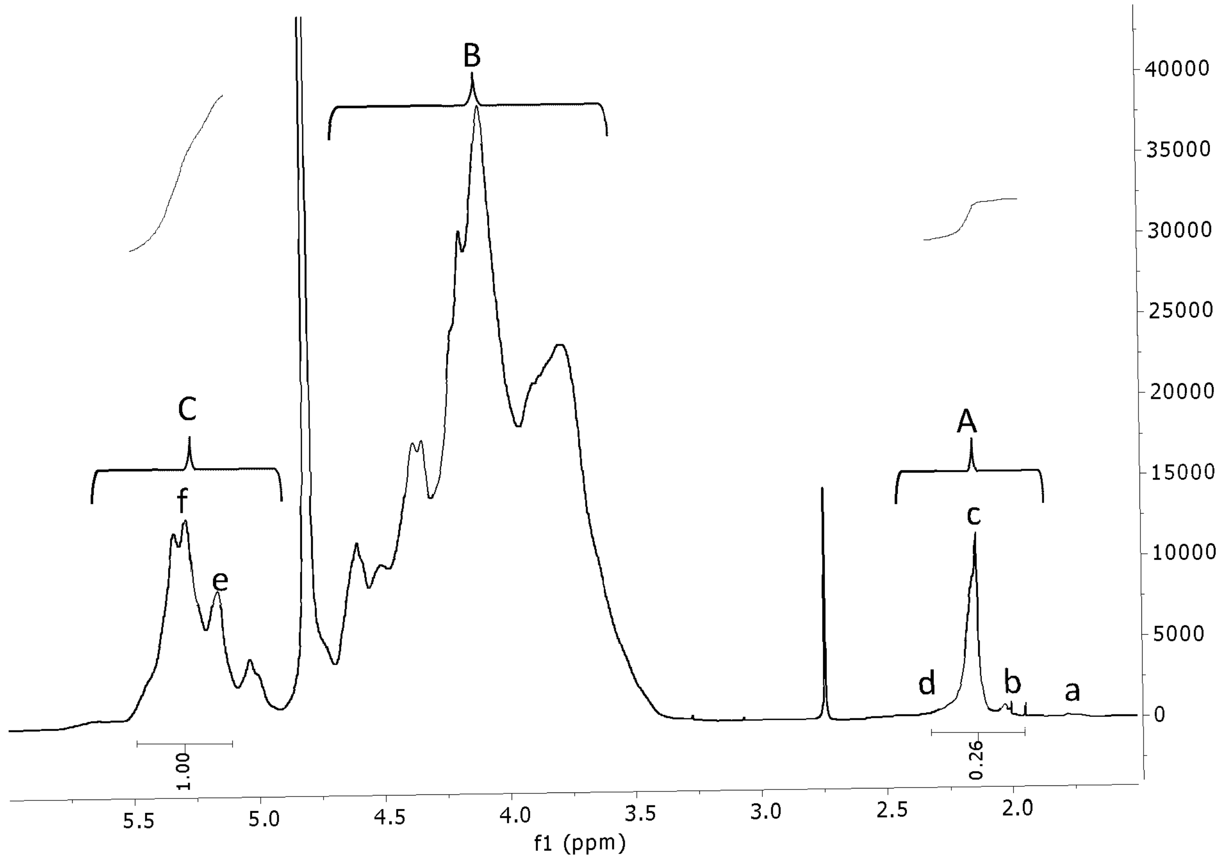


FIGURE 14

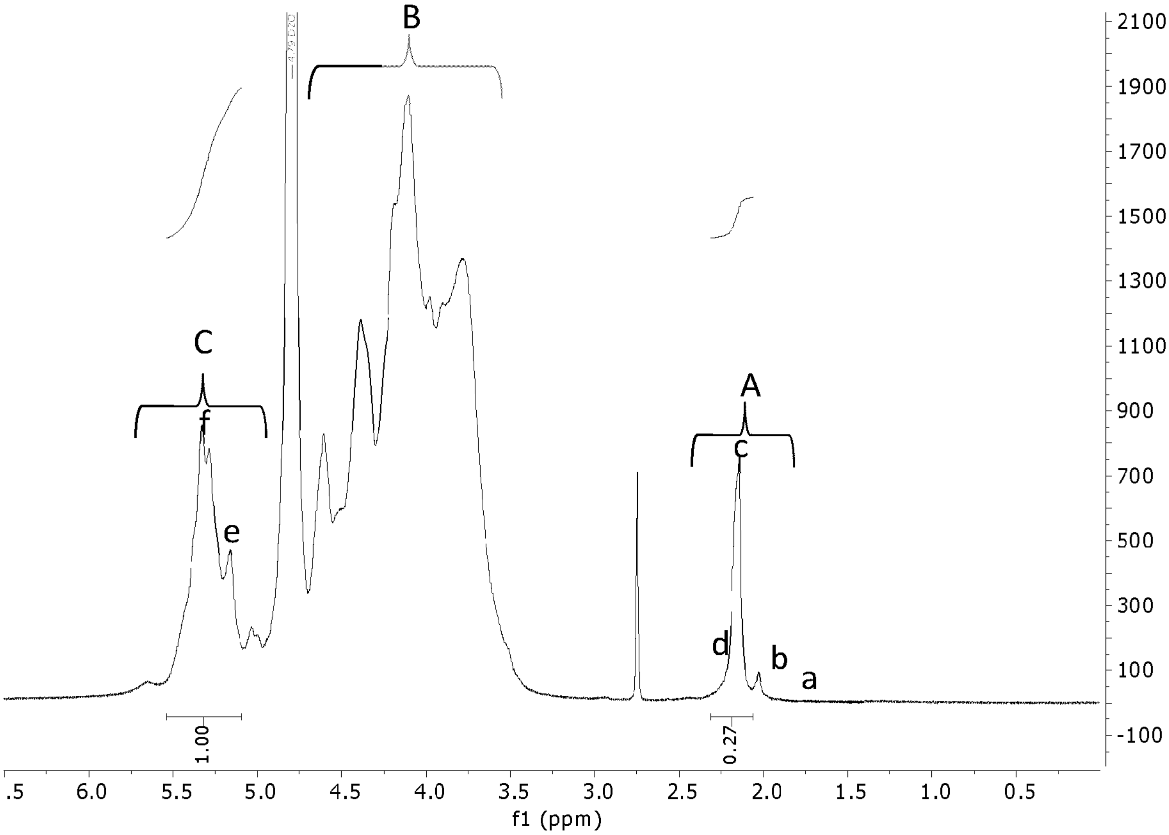


FIGURE 15

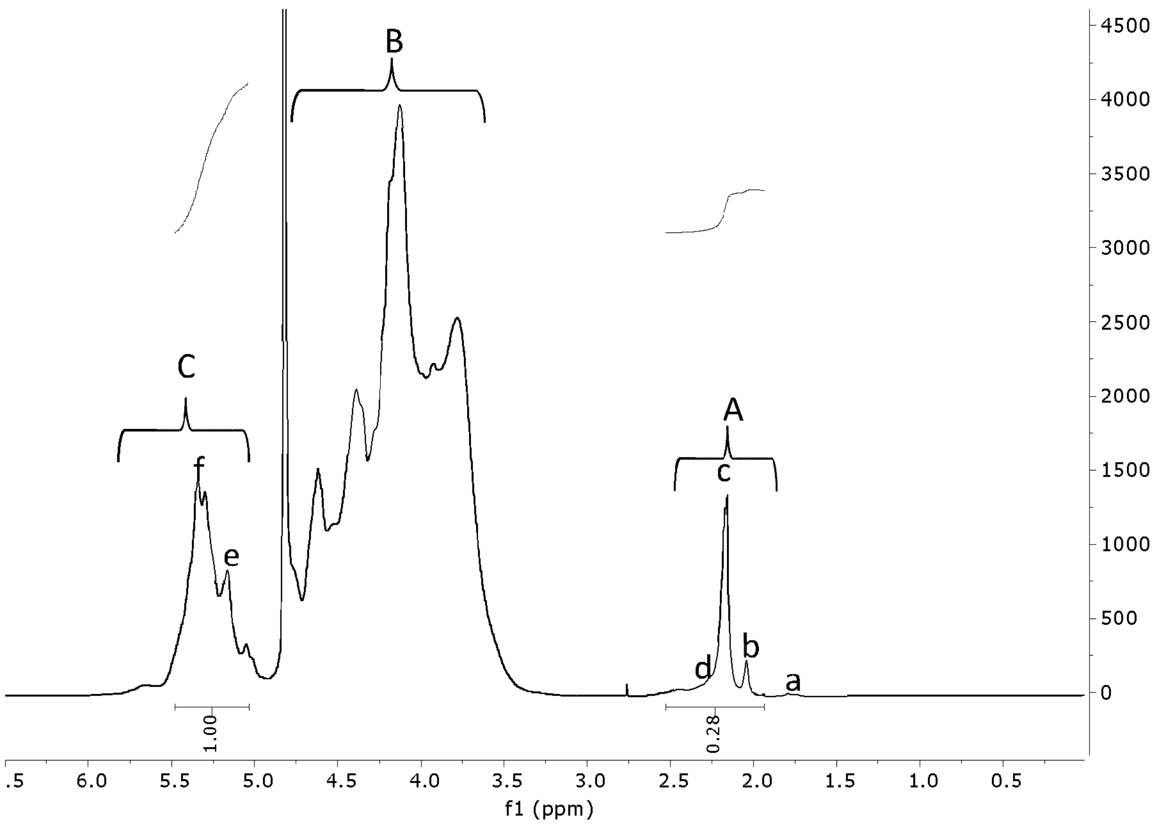


FIGURE 16

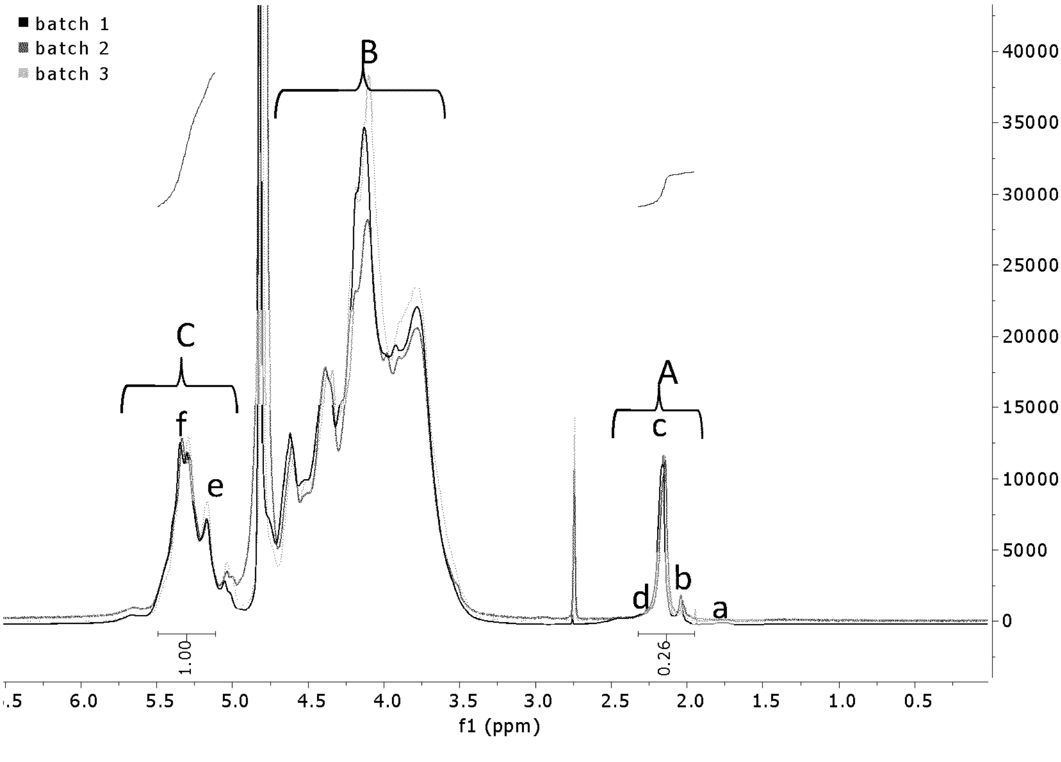
batch 1
batch 2
batch 3
B
C
A
f
e
c
d
b
a
1.00
0.26
40000
35000
30000
25000
20000
15000
10000
5000
0
6.0
5.5
5.0
4.5
4.0
3.5
3.0
2.5
2.0
1.5
1.0
0.5
f1 (ppm)

FIGURE 17

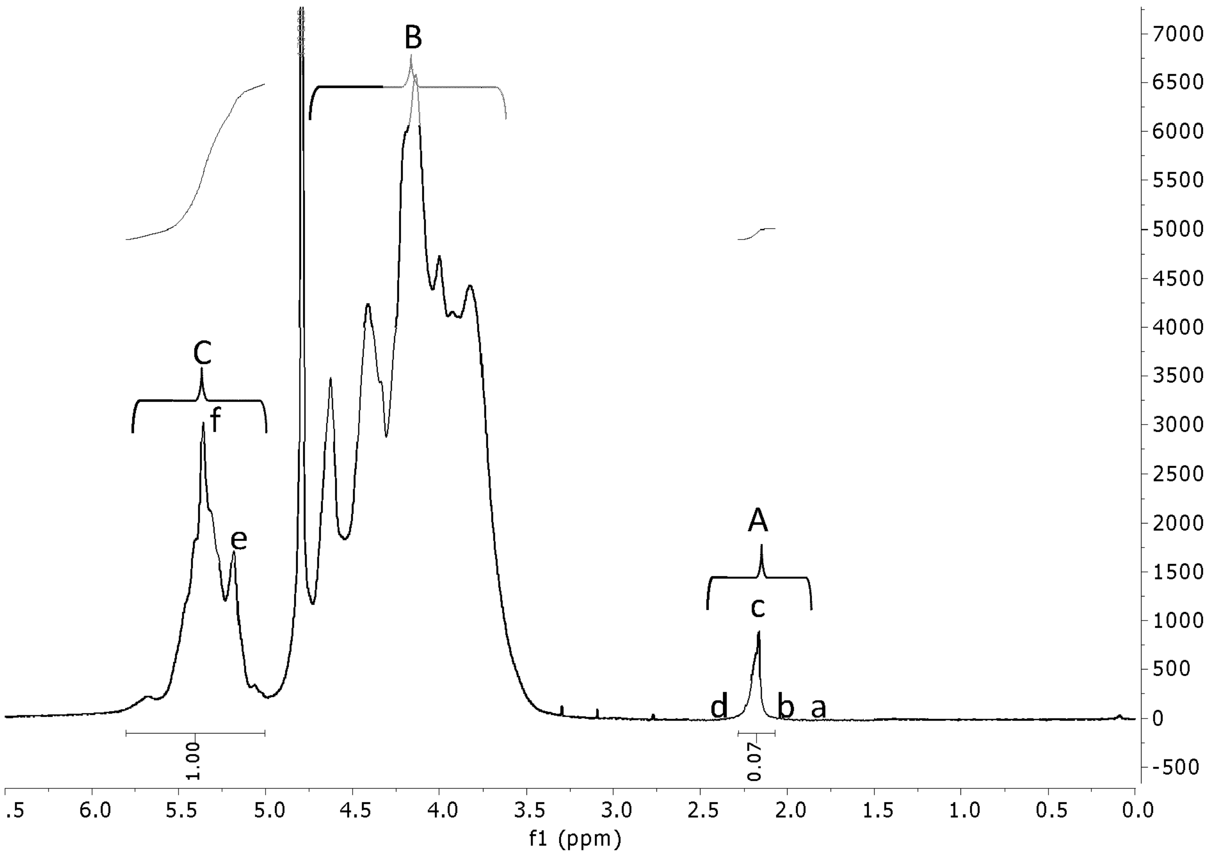
B
C
f
e
A
c
d
b
a
1.00
0.07
7000
6500
6000
5500
5000
4500
4000
3500
3000
2500
2000
1500
1000
500
0
-500
.5
6.0
5.5
5.0
4.5
4.0
3.5
3.0
2.5
2.0
1.5
1.0
0.5
0.0
f1 (ppm)

FIGURE 18

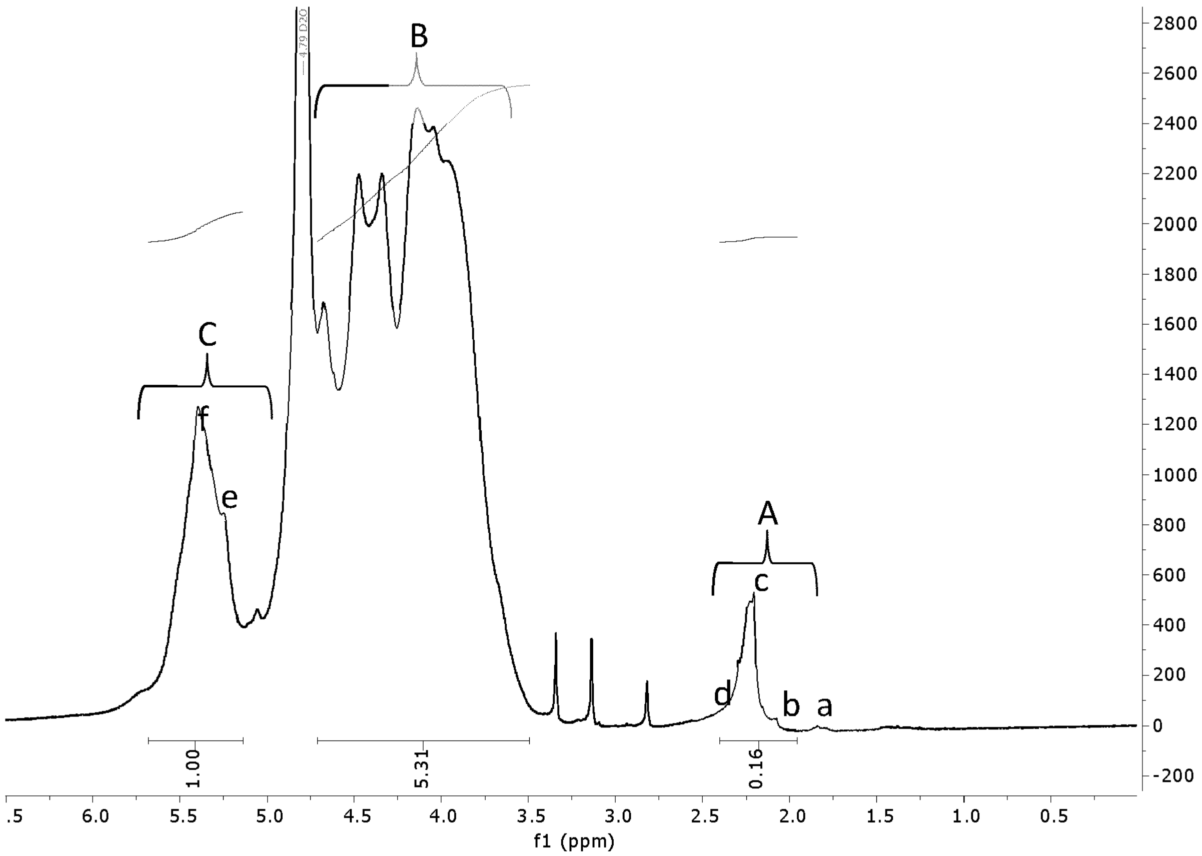
4.79 D2O
B
C
f
e
A
c
d
b
a
1.00
5.31
0.16
2800
2600
2400
2200
2000
1800
1600
1400
1200
1000
800
600
400
200
0
-200
.5
6.0
5.5
5.0
4.5
4.0
3.5
3.0
2.5
2.0
1.5
1.0
0.5
f1 (ppm)

FIGURE 19

European Patent Office

# EUROPEAN SEARCH REPORT

Application Number
EP 24 30 6431

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HETTRICH KAY ET AL: "New Possibilities of the Acetosulfation of Cellulose", MACROMOLECULAR SYMPOSIA, vol. 262, no. 1, 1 January 2008 (2008-01-01), pages 162-169, XP055899113, DE ISSN: 1022-1360, DOI: 10.1002/masy.200850216 | 1-9,11, 12 | INV. C08B37/02 C07B45/02 |
| A | * abstract; figure 1; pages 164-165, paragraph "Sulfation of cellulose (example Sul-6)"; table 2, sample Sul-12 * ----- | 10 | |

TECHNICAL FIELDS SEARCHED (IPC)

C08B
C07B

The present search report has been drawn up for all claims

| Place of search | Date of completion of the search | Examiner |
|---|---|---|
| Munich | 24 January 2025 | Pellegrini, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

1

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3870841 A
- US 3870841 B


### Non-patent literature cited in the description


- **PENGFENG et al.** Preparation and characterization of carboxymethyl chitosan sulfate / oxidized konjac glucomannan hydrogels. *International Journal of Biological Macromolecules*, 2018
- **MUVARELLI et al.** Sulfate d N-(Carboxymethyl) Chitosans: Novel Blood Anticoagulants. *Carbohydrate Research*, 1984
- *CHEMICAL ABSTRACTS*, 75-12-7
- *CHEMICAL ABSTRACTS*, 68-12-2
- *CHEMICAL ABSTRACTS*, 29584-42-7
- *CHEMICAL ABSTRACTS*, 108-24-7
- **MCCOMB, ELIZABETH A.** ; **MCCREADY, R. M.** Determination of acetyl in pectin and in acetylated carbohydrate polymers. *Analytical Chemistry*, 1957, vol. 29 (5), 819-821
- *CHEMICAL ABSTRACTS*, 9004-S4-0
- **LUO, PENGFENG** ; **NIE, MING** ; **WEN, HUIGAO et al.** Preparation and characterization of carboxymethyl chitosan sulfate/oxidized konjac glucomannan hydrogels. *International journal of biological macromolecules*, 2018, vol. 113, 1024-1031
- **MUZZARELLI, RICCARDO AA** ; **TANFANI, FABIO** ; **EMANUELLI, MONICA et al.** Sulfated N-(carboxymethyl) chitosans: novel blood anticoagulants. *Carbohydrate research*, 1984, vol. 126 (2), 225-231
- **PAPY-GARCIA, DULCE** ; **BARBIER-CHASSEFIÈRE, VÉRONIQUE** ; **ROUET, VINCENT et al.** Nondegradative sulfation of polysaccharides. Synthesis and structure characterization of biologically active heparan sulfate mimetics. *Macromolecules*, 2005, vol. 38 (11), 4647-4654
- **MCCOMB, ELIZABETH A** ; **MCCREADY, R. M.** Determination of acetyl in pectin and in acetylated carbohydrate polymers. *Analytical Chemistry*, 1957, vol. 29 (5), 819-821
- **PETITOU, MAURICE** ; **COUDERT, CATHERINE** ; **LEVEL, MICHEL et al.** Selectively O-acylated glycosaminoglycan derivatives. *Carbohydrate research*, 1992, vol. 236, 107-119